(19) **Europäisches Patentamt / European Patent Office / Office européen des brevets**

(11) **EP 4 322 646 A1**

(12) **EUROPEAN PATENT APPLICATION**
published in accordance with Art. 153(4) EPC

(43) Date of publication:
**14.02.2024 Bulletin 2024/07**

(21) Application number: **22785039.3**

(22) Date of filing: **11.04.2022**

(51) International Patent Classification (IPC):
**H04W 72/02** $^{(2009.01)}$    **H04W 72/04** $^{(2023.01)}$
**H04W 72/12** $^{(2023.01)}$    **H04W 76/14** $^{(2018.01)}$
**H04W 76/28** $^{(2018.01)}$    **H04W 4/40** $^{(2018.01)}$
**H04W 92/18** $^{(2009.01)}$

(52) Cooperative Patent Classification (CPC):
**H04W 4/40; H04W 72/02; H04W 72/04;
H04W 72/12; H04W 76/14; H04W 76/28;
H04W 92/18**

(86) International application number:
**PCT/KR2022/005198**

(87) International publication number:
**WO 2022/216131 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.04.2021 KR 20210046731**

(71) Applicant: **LG Electronics Inc.**
**Yeongdeungpo-gu**
**Seoul 07336 (KR)**

(72) Inventors:
• **KO, Woosuk**
  **Seoul 06772 (KR)**
• **SEO, Hanbyul**
  **Seoul 06772 (KR)**
• **LEE, Seungmin**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR SELECTING RESOURCE IN NR V2X ON BASIS OF PARTIAL SENSING**

(57)    Provided are a method by which a first device performs wireless communication, and an apparatus supporting same. The method may comprise the steps of: acquiring a plurality of resource reservation periods set in a resource pool; determining at least one first candidate slot for selecting a first sidelink (SL) resource; performing first sensing on at least one first slot related to the at least one first candidate slot on the basis of at least one first resource reservation period from among the plurality of resource reservation periods; selecting the first SL resource on the basis of the first sensing; transmitting first sidelink control information (SCI) including informa- tion for scheduling a physical sidelink shared channel (PSSCH) through a physical sidelink control channel (PSCCH) on the basis of the first SL resource; transmitting second SCI and a media access control (MAC) protocol data unit (PDU) through the PSSCH on the basis of the first SL resource; and determining at least one second resource reservation period for selecting a sec- ond SL resource from among the plurality of resource reservation periods, on the basis of hybrid automatic re- peat request (HARQ) feedback for the MAC PDU and the at least one first resource reservation period.

# FIG. 15

```
obtain resource reservation periods          S1510
configured in resource pool
```

```
determine at least one first candidate slot   S1520
for selecting first SL resource
```

```
perform first sensing for at least one first slot    S1530
related to at least one first candidate slot based on
at least one first resource reservation period
among resource reservation periods
```

```
select first SL resource based on first sensing    S1540
```

```
transmit first SCI including information for scheduling of    S1550
PSSCH through PSCCH based on first SL resource
```

```
transmit second SCI and MAC PDU through PSSCH    S1560
based on first SL resource
```

```
determine, based on HARQ feedback for MAC PDU    S1570
and at least one first resource reservation period,
at least one second resource reservation period
for selecting second SL resource among resource
reservation periods
```

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

### DISCLOSURE

### TECHNICAL PROBLEM

Meanwhile, since conventional sidelink (SL) resource scheduling is optimized based on full sensing, a problem of reduced efficiency may occur when the UE operates based on partial sensing. For example, if the UE performs sensing based on at least one resource reservation period configured for the UE among a plurality of resource reservation period configured in a resource pool, the UE may need to change a resource reservation period to be used for the next sensing based on whether SL transmission is successful using the selected resource based on the results of the sensing.

### TECHNICAL SOLUTION

In an embodiment, provided is a method for performing wireless communication by a first device. The method may comprise: obtaining a plurality of resource reservation periods configured in a resource pool; determining at least one first candidate slot for selecting a first sidelink (SL) resource; performing first sensing for at least one first slot related to the at least one first candidate slot based on at least one first resource reservation period among the plurality of resource reservation periods; selecting the first SL resource based on the first sensing; transmitting first sidelink control information (SCI) including information for scheduling of a physical sidelink shared channel (PSSCH) through a physical sidelink control channel (PSCCH) based on the first SL resource; transmitting second SCI and a media access control (MAC) protocol data unit (PDU) through the PSSCH based on the first SL resource; and determining, based on hybrid automatic repeat request (HARQ) feedback for the MAC PDU and the at least one first resource reservation period, at least one second resource reservation period for selecting a second SL resource among the plurality of resource reservation periods.

In an embodiment, provided is a first device adapted to perform wireless communication. The first device may comprise: one or more memories storing instructions; one or more transceivers; and one or more processors connected to the one or more memories and the one or more transceivers. The one or more processors may execute the instructions to: obtain a plurality of resource reservation periods configured in a resource pool; determine at least one first candidate slot for selecting a first sidelink (SL) resource; perform first sensing for at least one first slot related to the at least one first candidate slot based on at least one first resource reservation period among the plurality of resource reservation periods; select the first SL resource based on the first sensing; transmit first sidelink control information (SCI) including information for scheduling of a physical sidelink shared channel (PSSCH) through a physical sidelink control channel (PSCCH) based on the first SL resource; transmit second SCI and a media access control (MAC) protocol data unit (PDU) through the PSSCH based on the first SL resource; and determine, based on hybrid automatic repeat request (HARQ) feedback for the MAC PDU and the at least one first resource reservation period, at least one second resource reservation period for selecting a second SL resource among the plurality of resource reservation periods.

## ADVANTAGEOUS EFFECTS

If the UE performing partial sensing receives HARQ ACK, power due to partial sensing can be further reduced by reducing the number of sensing periods for retransmission. Furthermore, if the UE performing partial sensing receives HARQ NACK, the success rate of sidelink data transmission can be further increased by increasing the number of sensing periods for retransmission. In addition, by selecting transmission resources such that transmission resources are widely spaced in time, taking into account packet transmission pre-empted by packet transmission with a higher priority, the probability of resource conflict can be reduced if another UE performs resource reselection.

## BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIGs. 8 and 9 show a method for a UE to perform PPS, based on an embodiment of the present disclosure.
FIG. 10 shows a method for a UE to perform CPS, based on an embodiment of the present disclosure.
FIGs. 11 and 12 show a method for a UE selecting a resource based on CPS to perform a pre-emption procedure or a re-evaluation procedure based on PPS and CPS, based on an embodiment of the present disclosure.
FIG. 13 shows a procedure for a transmission UE to perform partial sensing, based on an embodiment of the present disclosure.
FIG. 14 shows an example of resources being signaled through SCI, based on an embodiment of the present disclosure.
FIG. 15 shows a method for a first device to perform wireless communication, based on an embodiment of the present disclosure.
FIG. 16 shows a method for a second device to perform wireless communication, based on an embodiment of the present disclosure.
FIG. 17 shows a communication system 1, based on an embodiment of the present disclosure.
FIG. 18 shows wireless devices, based on an embodiment of the present disclosure.
FIG. 19 shows a signal process circuit for a transmission signal, based on an embodiment of the present disclosure.
FIG. 20 shows another example of a wireless device, based on an embodiment of the present disclosure.
FIG. 21 shows a hand-held device, based on an embodiment of the present disclosure.
FIG. 22 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on 5G NR. However, technical features according to an embodiment of the present disclosure will not be limited only to this.

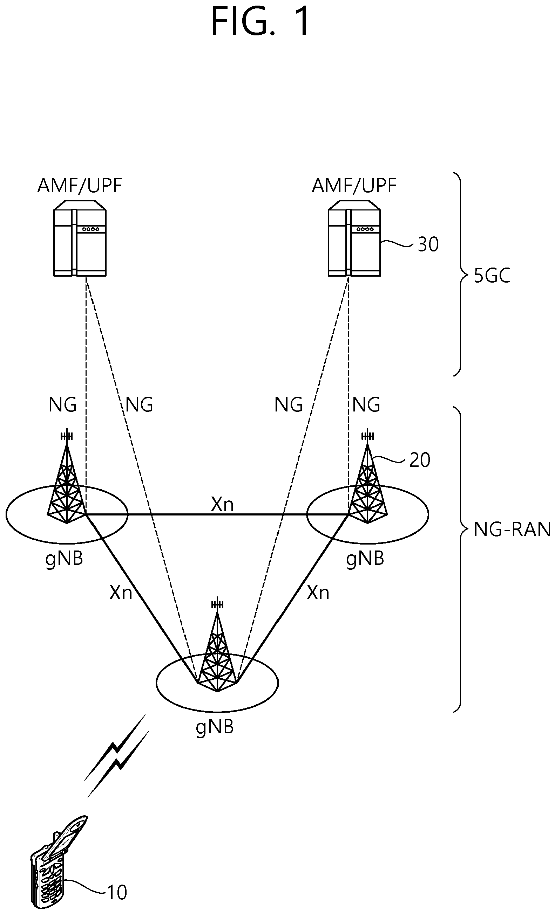

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

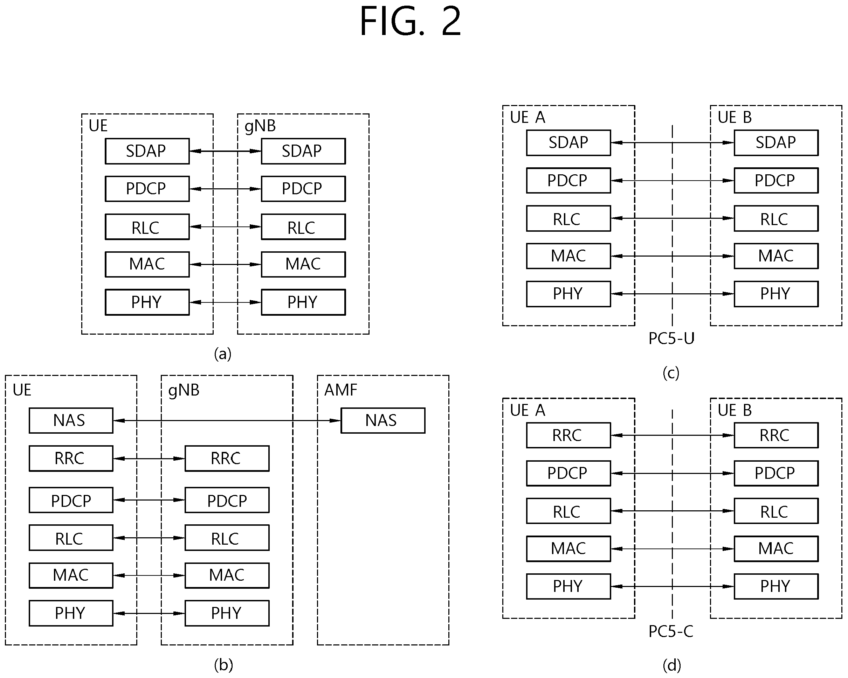

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

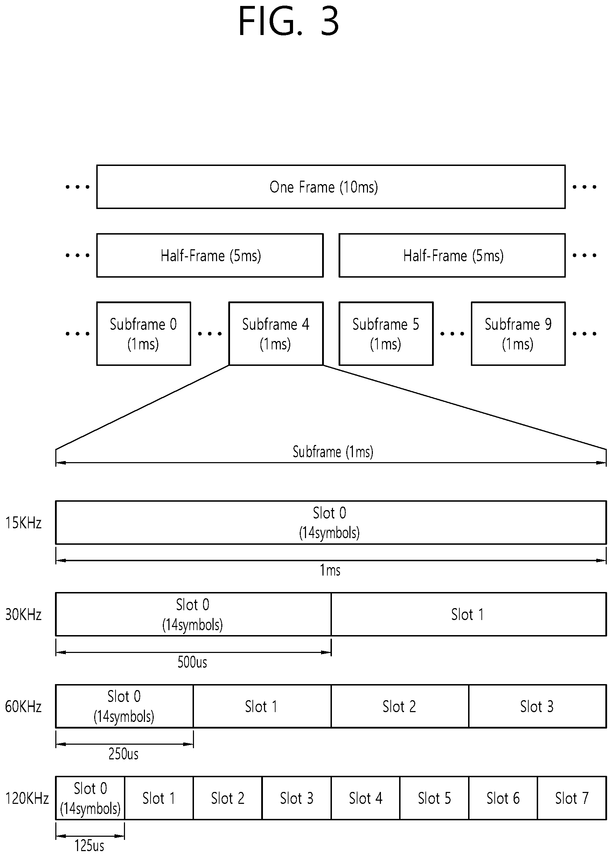

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |

(continued)

| SCS (15*2$^u$) | N$^{slot}_{symb}$ | N$^{frame,u}_{slot}$ | N$^{subframe,u}_{slot}$ |
|---|---|---|---|
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS (15*2$^u$) | N$^{slot}_{symb}$ | N$^{frame,u}_{slot}$ | N$^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

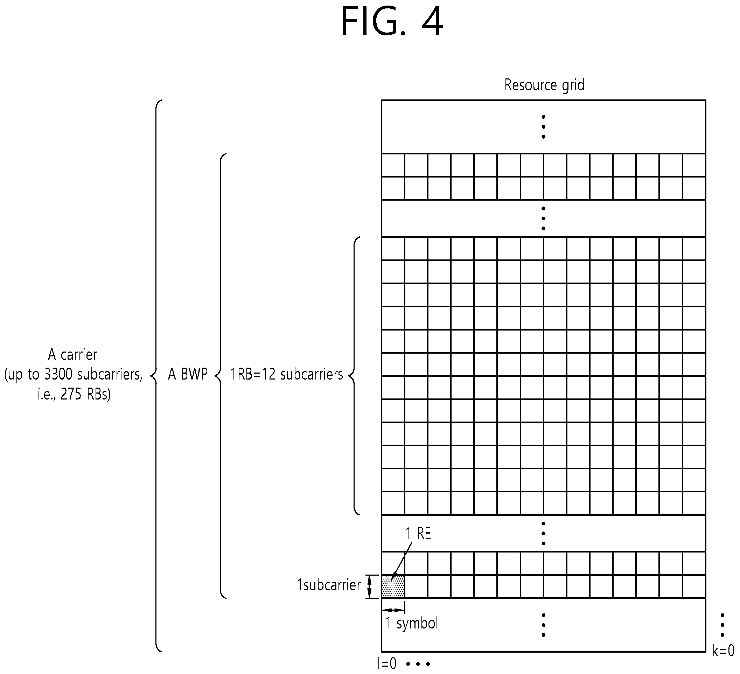

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

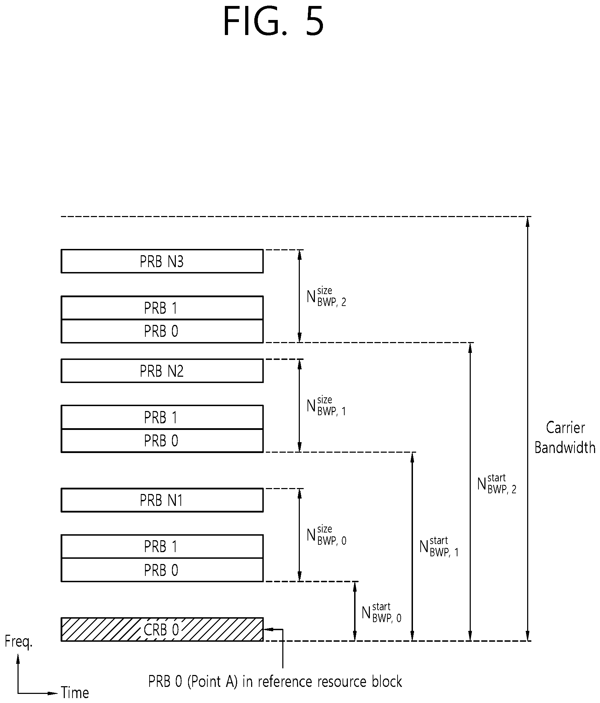

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

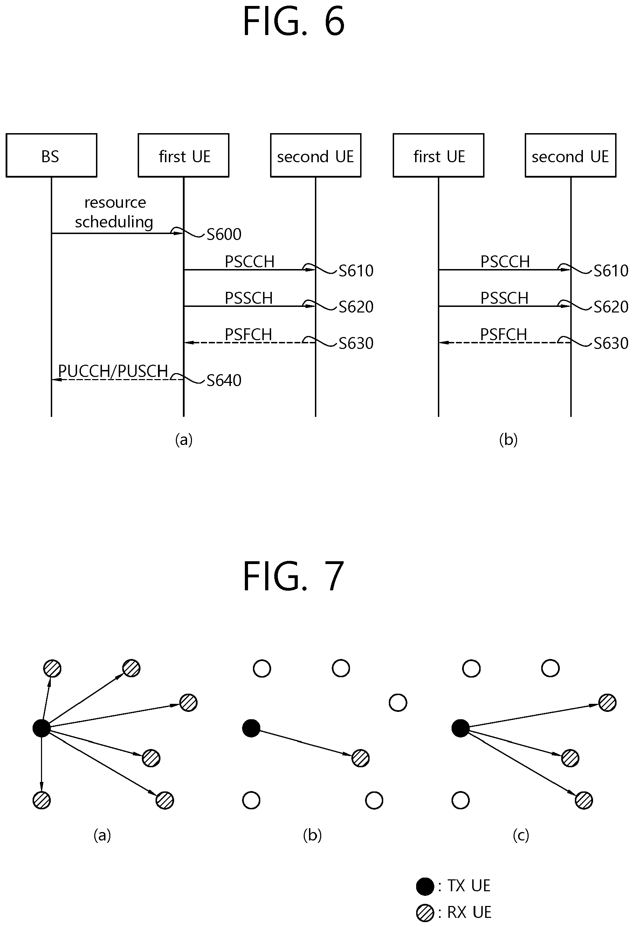

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:

- Resource pool index - ceiling ($\log_2$ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling ($\log_2(N^{SL}_{subChannel})$) bits
- SCI format 1-A fields: frequency resource assignment, time resource assignment
- PSFCH-to-HARQ feedback timing indicator - ceiling ($\log_2 N_{fb\_timing}$) bits, where $N_{fb\_timing}$ is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or $1^{st}$-stage SCI) to a second UE by using the resource(s). In step S620, the first UE may transmit a PSSCH (e.g., $2^{nd}$-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a $1^{st}$ SCI, a first SCI, a $1^{st}$-stage SCI or a $1^{st}$-stage SCI format, and a SCI transmitted through a PSSCH may be referred to as a $2^{nd}$ SCI, a second SCI, a $2^{nd}$-stage SCI or a $2^{nd}$-stage SCI format. For example, the $1^{st}$-stage SCI format may include a SCI format 1-A, and the $2^{nd}$-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- $2^{nd}$-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.

(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, UE procedure for reporting HARQ-ACK on sidelink will be described.

A UE can be indicated by an SCI format scheduling a PSSCH reception, in one or more sub-channels from a number of $N^{PSSCH}_{subch}$ sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot $t'^{SL}_k$ ($0 \leq k < T'_{max}$) has a PSFCH transmission occasion resource if $k \bmod N^{PSFCH}_{PSSCH}$ = 0, where $t'^{SL}_k$ is a slot that belongs to the resource pool, $T'_{max}$ is a number of slots that belong to the resource pool within 10240 msec, and $N^{PSFCH}_{PSSCH}$ is provided by sl-PSFCH-Period-r16. A UE may be indicated by higher layers to not transmit a PSFCH in response to a PSSCH reception. If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of $M^{PSFCH}_{PRB,set}$ PRBs in a resource pool for PSFCH transmission in a PRB of the resource pool. For a number of $N_{subch}$ subchannels for the resource pool, provided by sl-NumSubchannel, and a number of PSSCH slots associated with a PSFCH slot that is less than or equal to $N^{PSFCH}_{PSSCH}$, the UE allocates the $[(i+j \cdot N^{PSFCH}_{PSSCH}) \cdot M^{PSFCH}_{sbch,slot}, (i+1+j \cdot N^{PSFCH}_{PSSCH}) \cdot M^{PSFCH}_{subch,slot}-1]$ PRBs from the $M^{PSFCH}_{PRB,set}$ PRBs to slot i among the PSSCH slots associated with the PSFCH slot and subchannel j, where $M^{PSFCH}_{subch,slot} = M^{PSFCH}_{PRB,set}/(N_{subch} \cdot N^{PSFCH}_{PSSCH})$, $0 \leq i < N^{PSFCH}_{PSSCH}$, $0 \leq j < N_{subch}$, and the allocation starts in an ascending order of i and continues in an ascending order of j. The UE expects that $M^{PSFCH}_{PRB,set}$ is a multiple of $N_{subch} \cdot N^{PSFCH}_{PSSCH}$.

A UE determines a number of PSFCH resources available for multiplexing HARQ-ACK information in a PSFCH transmission as $R^{PSFCH}_{PRB,CS} = N^{PSFCH}_{type} \cdot M^{PSFCH}_{subch,slot} \cdot N^{PSFCH}_{CS}$ where $N^{PSFCH}_{CS}$ is a number of cyclic shift pairs for the resource pool and, based on an indication by higher layers,

- $N^{PSFCH}_{type}$ = 1 and the $M^{PSFCH}_{subch,slot}$ PRBs are associated with the starting subchannel of the corresponding PSSCH

- $N^{PSFCH}_{type} = N^{PSSCH}_{subch}$ and the $N^{PSSCH}_{subch} \cdot M^{PSFCH}_{subch,slot}$ PRBs are associated with one or more sub-channels from the $N^{PSSCH}_{subch}$ sub-channels of the corresponding PSSCH

The PSFCH resources are first indexed according to an ascending order of the PRB index, from the $N^{PSFCH}_{type} \cdot M^{PSFCH}_{subch,slot}$ PRBs, and then according to an ascending order of the cyclic shift pair index from the $N^{PSFCH}_{CS}$ cyclic shift pairs.

A UE determines an index of a PSFCH resource for a PSFCH transmission in response to a PSSCH reception as $(P_{ID} + M_{ID})$ mod $R^{PSFCH}_{PRS,CS}$ where $P_{ID}$ is a physical layer source ID provided by SCI format 2-A or 2-B scheduling the PSSCH reception, and $M_{ID}$ is the identity of the UE receiving the PSSCH as indicated by higher layers if the UE detects a SCI format 2-A with Cast type indicator field value of "01"; otherwise, $M_{ID}$ is zero.

A UE determines a $m_0$ value, for computing a value of cyclic shift $\alpha$, from a cyclic shift pair index corresponding to a PSFCH resource index and from $N^{PSFCH}_{CS}$ using Table 8.

[Table 8]

| $N^{PSFCH}_{CS}$ | $m_0$ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a $m_{cs}$ value, for computing a value of cyclic shift $\alpha$, as in Table 9 if the UE detects a SCI format 2-A with Cast type indicator field value of "01" or "10", or as in Table 10 if the UE detects a SCI format 2-B or a SCI format 2-A with Cast type indicator field value of "11". The UE applies one cyclic shift from a cyclic shift pair to a sequence used for the PSFCH transmission.

[Table 9]

| HARQ-ACK Value | 0 (NACK) | 1 (ACK) |
|---|---|---|
| Sequence cyclic shift | 0 | 6 |

[Table 10]

| HARQ-ACK Value | 0 (NACK) | 1 (ACK) |
|---|---|---|
| Sequence cyclic shift | 0 | N/A |

Hereinafter, UE procedure for determining the subset of resources to be reported to higher layers in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, L sub CH;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.
- it is up to UE implementation to determine the subset of resources as requested by higher layers before or after the

slot $r_i''$ - $T_3$, where $r_i''$ is the slot with the smallest slot index among $(r_0, r_1, r_2, ...)$ and $(r'_0, r'_1, r'_2, ...)$, and $T_3$ is equal to $T^{SL}_{proc,1}$. Herein, $T^{SL}_{proc,1}$ is defined as the number of slots based on SCS, where $\mu_{SL}$ is the SCS configuration of the SL BWP.

The following higher layer parameters affect this procedure:

- sl-SelectionWindowList: internal parameter $T_{2min}$ is set to the corresponding value from higher layer parameter sl-SelectionWindowList for the given value of $prio_{TX}$.
- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter X for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

$(t'^{SL}_0, t'^{SL}_1, t'^{SL}_2, ...)$ denotes the set of slots which belongs to the sidelink resource pool.
For example, the UE may select a set of candidate resources ($S_A$) based on Table 11. For example, if resource (re)selection is triggered, the UE may select a set of candidate resources ($S_A$) based on Table 11. For example, if re-evaluation or pre-emption is triggered, the UE may select a set of candidate resources ($S_A$) based on Table 11.

[Table 11]

| |
|---|
| The following steps are used:<br><br>1) A candidate single-slot resource for transmission $R_{x,y}$ is defined as a set of $L_{subCH}$ contiguous sub-channels with sub-channel $x+j$ in slot $t'^{SL}_y$ where $j = 0,..., L_{subCH}$ - 1. The UE shall assume that any set of $L_{subCH}$ contiguous sub-channels included in the corresponding resource pool within the time interval [$n + T_1, n + T_2$] correspond to one candidate single-slot resource, where<br><br>    - selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP;<br>    - if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots). The total number of candidate single-slot resources is denoted by $M_{total}$.<br><br>2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.<br><br>3) The internal parameter $Th(p_i, p_j)$ is set to the corresponding value of RSRP threshold indicated by the i-th field in *sl-Thres-RSRP-List,* where $i = p_i + (p_j - 1) * 8$.<br><br>4) The set $S_A$ is initialized to the set of all the candidate single-slot resources. |

5) The UE shall exclude any candidate single-slot resource $R_{x,y}$ from the set $S_A$ if it meets all the following conditions:

- the UE has not monitored slot $t'^{SL}_m$ in Step 2.

- for any periodicity value allowed by the higher layer parameter *sl-ResourceReservePeriodList* and a hypothetical SCI format 1-A received in slot $t'^{SL}_m$ with *'Resource reservation period'* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and *'Resource reservation period'* field, if present, and *'Priority'* field in the received SCI format 1-A indicate the values $P_{rsvp\_RX}$ and $prio_{RX}$, respectively;

b) the RSRP measurement performed, for the received SCI format 1-A, is higher than $Th(prio_{RX}, prio_{TX})$;

c) the SCI format received in slot $t'^{SL}_m$ or the same SCI format which, if and only if the *'Resource reservation period'* field is present in the received SCI format 1-A, is assumed to be received in slot(s) $t'^{SL}_{m+q \times P'_{rsvp\_RX}}$ determines the set of resource blocks and slots which overlaps with $R_{x,y+j \times P'_{rsvp\_TX}}$ for $q$=1, 2, ..., $Q$ and $j$=0, 1, ..., $C_{resel}$ - 1. Here, $P'_{rsvp\_RX}$ is $P_{rsvp\_RX}$ converted to units of logical slots, $Q = \left\lceil \frac{T_{scal}}{P_{rsvp\_RX}} \right\rceil$ if $P_{rsvp\_RX} < T_{scal}$ and $n' - m \le P'_{rsvp\_RX}$, where $t'^{SL}_{n'} = n$ if slot $n$ belongs to the set $\left( t'^{SL}_0, t'^{SL}_1, \ldots, t'^{SL}_{T'_{max}-1} \right)$, otherwise slot $t'^{SL}_{n'}$ is the first slot after slot $n$ belonging to the set $\left( t'^{SL}_0, t'^{SL}_1, \ldots, t'^{SL}_{T'_{max}-1} \right)$; otherwise $Q$ = 1. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set $(r_0, r_1, r_2, ...)$ is not a member of $S_A$, then the UE shall report re-evaluation of the resource $r_i$ to higher layers.

If a resource $r'_i$ from the set $(r'_0, r'_1, r'_2, ...)$ meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:

- *sl-PreemptionEnable* is provided and is equal to 'enabled' and $prio_{TX} > prio_{RX}$

(continued)

| |
|---|
| - *sl-PreemptionEnable* is provided and is not equal to 'enabled', and $prio_{RX} <$ $prio_{pre}$ and $prio_{TX} > prio_{RX}$ |

Meanwhile, partial sensing may be supported for power saving of the UE. For example, in LTE SL or LTE V2X, the UE may perform partial sensing based on Tables 12 and 13.

[Table 12]

| |
|---|
| In sidelink transmission mode 4, when requested by higher layers in subframe *n* for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers. <br><br> In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers. <br><br> $C_{resel}$ is determined by $C_{resel}$=10*SL_RESOURCE_RESELECTION_COUNTER, where SL_RESOURCE_ RESELECTION_COUNTER is provided by higher layers. <br><br> ... <br><br> If partial sensing is configured by higher layers then the following steps are used: |
| 1) A candidate single-subframe resource for PSSCH transmission $R_{x,y}$ is defined as a set of $L_{subCH}$ contiguous sub-channels with sub-channel x+j in subframe $t_y^{SL}$ where *j* =0,...,$L_{subCH}$-1. The UE shall determine by its implementation a set of subframes which consists of at least Y subframes within the time interval [$n + T_1, n + T_2$] where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 < 100$. UE selection of $T_2$ shall fulfil the latency requirement and Y shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$. <br><br> 2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes. <br><br> 3) The parameter $Th_{a,b}$ is set to the value indicated by the i-th *SL-ThresPSSCH-RSRP* field in SL-*ThresPSSCH-RSRP-List* where *i* = (*a* - 1) * 8 + *b*. <br><br> 4) The set $S_A$ is initialized to the union of all the candidate single-subframe resources. The set $S_B$ is initialized to an empty set. <br><br> 5) The UE shall exclude any candidate single-subframe resource $R_{x,y}$ from the set $S_A$ if it meets all the following conditions: <br><br>      - the UE receives an SCI format 1 in subframe $t_m^{SL}$, and "Resource reservation" field and "Priority" field in the received SCI format 1 indicate the values $P_{rsvp\_RX}$ and $prio_{RX}$, respectively. <br><br>      - PSSCH-RSRP measurement according to the received SCI format 1 is higher than $Th_{prioTX,prioRX}$. |

| |
|---|
| - the SCI format received in subframe $t_m^{SL}$ or the same SCI format 1 which is assumed to be received in subframe(s) $t_{m+q \times P_{step} \times P_{rsvp\_RX}}^{SL}$ determines according to 14.1.1.4C the set of resource blocks and subframes which overlaps with $R_{x,y+j \times P'_{rsvp\_TX}}$ for $q$=1, 2, ..., $Q$ and $j$=0, 1, ..., $C_{reser}$-1. Here, $$Q = \frac{1}{P_{rsvp\_RX}}$$ if $P_{rsvp\_RX} < 1$ and $y' - m \leq P_{step} \times P_{rsvp\_RX} + P_{step}$, where $t_{y'}^{SL}$ is the last subframe of the $Y$ subframes , and $Q$ = 1 otherwise. |
| 6) If the number of candidate single-subframe resources remaining in the set $S_A$ is smaller than $0.2 \cdot M_{total}$, then Step 4 is repeated with Tlb,b increased by 3 dB. |

[Table 13]

| |
|---|
| 7) For a candidate single-subframe resource $R_{x,y}$ remaining in the set $S_A$ , the metric $E_{x,y}$ is defined as the linear average of S-RSSI measured in sub-channels $x+k$ for $k$ =0,... $L_{subCH}$-1 in the monitored subframes in Step 2 that can be expressed by $t_{y-P_{step}*j}^{SL}$ for a non-negative integer j. |
| 8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$. |
| 9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time. |
| The UE shall report set $S_B$ to higher layers. |
| If transmission based on random selection is configured by upper layers and when the UE is configured by upper layers to transmit using resource pools on multiple carriers, the following steps are used: |
| 1) A candidate single-subframe resource for PSSCH transmission $R_{x,y}$ is defined as a set of $L_{subCH}$ contiguous sub-channels with sub-channel $x+j$ in subframe $t_y^{SL}$ where $j$ =0,...,$L_{subCH}$-1. The UE shall assume that any set of $L_{subCH}$ contiguous sub-channels included in the corresponding PSSCH resource pool within the time interval $[n+T_1,n+T_2]$ corresponds to one candidate single-subframe resource, where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$. |
| 2) The set $S_A$ is initialized to the union of all the candidate single-subframe resources. The set $S_B$ is initialized to an empty set. |

(continued)

> 3) The UE moves the candidate single-subframe resource $R_{x,y}$ from the set $S_A$ to $S_B$.
>
> 4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.
>
> The UE shall report set $S_B$ to higher layers.

Meanwhile, since conventional sidelink (SL) resource scheduling is optimized based on full sensing, a problem of reduced efficiency may occur when the UE operates based on partial sensing. For example, if the UE performs sensing based on at least one resource reservation period configured for the UE among a plurality of resource reservation period configured in a resource pool, the UE may need to change a resource reservation period and/or a bitmap to be used for the next sensing based on whether SL transmission is successful using the selected resource based on the results of the sensing.

Based on various embodiments of the present disclosure, a resource scheduling method and an apparatus supporting the same are proposed that can minimize power consumption of the UE when the UE is operating based on partial sensing. In the present disclosure, partial sensing may include periodic-based partial sensing (PPS) or continuous partial sensing (CPS). In this disclosure, PPS may also be referred to as PBPS.

For example, in various embodiments of the disclosure, periodic-based partial sensing (PPS) may refer to performing sensing, based on the number of periods corresponding to certain configured value(s), at the time corresponding to an integer multiple (k) of each of the periods when performing sensing for resource selection. For example, the periods may be periods of transmission resources configured in a resource pool. For example, resources at the time before the integer multiple k value of each of the periods from the time of candidate resources that are the subject of the resource conflict determination may be sensed. For example, the k value may be configured in the form of a bitmap.

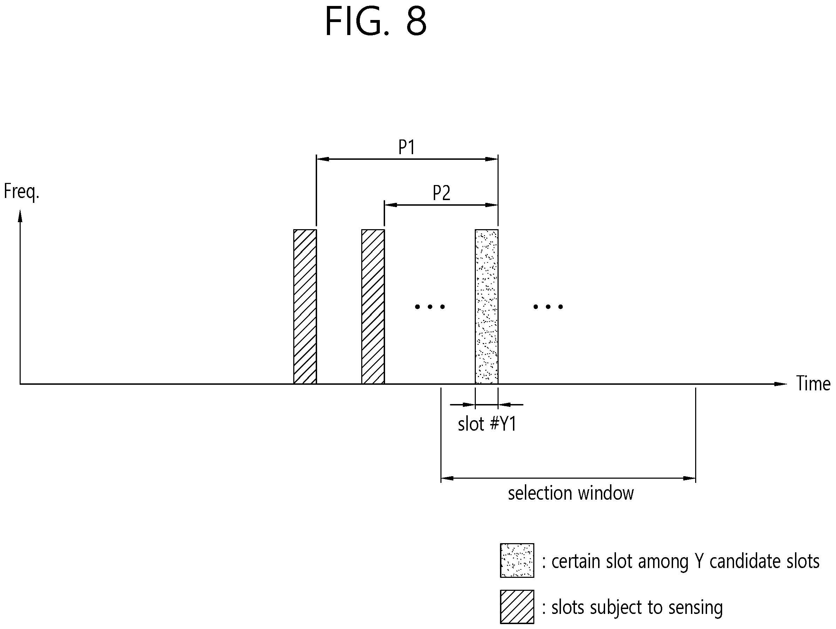

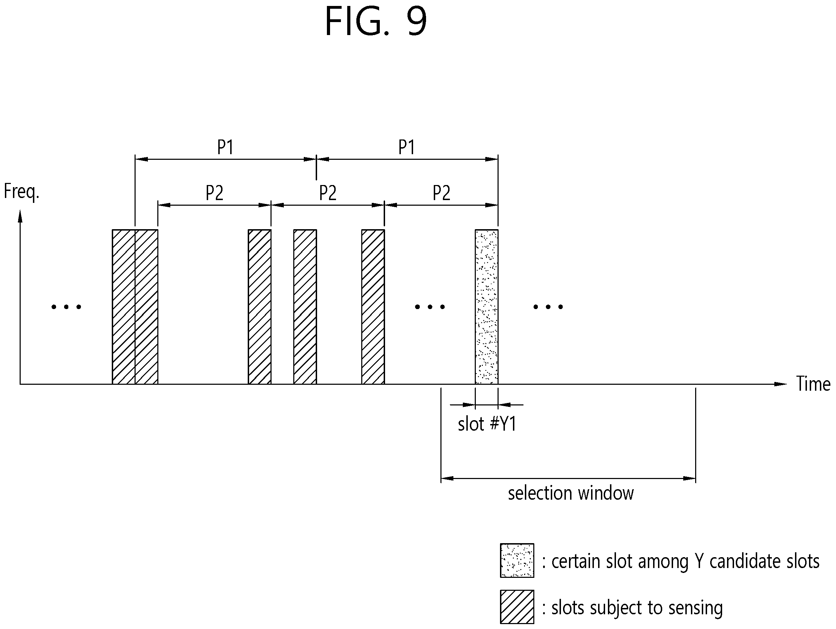

FIGs. 8 and 9 show a method for a UE to perform PPS, based on an embodiment of the present disclosure. The embodiments of FIGs. 8 and 9 may be combined with various embodiments of the present disclosure.

In the embodiments of FIGs. 8 and 9, it is assumed that resource reservation periods allowed for a resource pool or resource reservation periods configured for PPS are P1 and P2. Furthermore, it is assumed that the UE performs partial sensing (i.e., PPS) to select SL resources within the slot #Y1.

Referring to FIG. 8, the UE may perform sensing for the slot located before P1 from the slot #Y1, and for the slot located before P2 from the slot #Y1.

Referring to FIG. 9, the UE may perform sensing for the slot located before P1 from the slot #Y1, and for the slot located before P2 from the slot #Y1. Furthermore, optionally, the UE may perform sensing for the slot located before A * P1 from the slot #Y1, and the slot located before B * P2 from the slot #Y1. For example, A and B may be positive integers greater than or equal to 2. Specifically, for example, the UE that selects the slot #Y1 as a candidate slot may perform sensing for the slot #(Y1 - resource reservation period*k), where k may be a bitmap. For example, if k is 10001, the UE that selects the slot #Y1 as a candidate slot may perform sensing for the slot #(Y1-P1*1), the slot #(Y1-P1*5), the slot #(Y1-P2*1), and the slot #(Y1-P2*5).

For example, in various embodiments of the present disclosure, continuous partial sensing (CPS) may refer to performing sensing for all or a part of a time domain given a certain configured value. For example, CPS may include a short-term sensing operation that performs sensing for a relatively short interval.

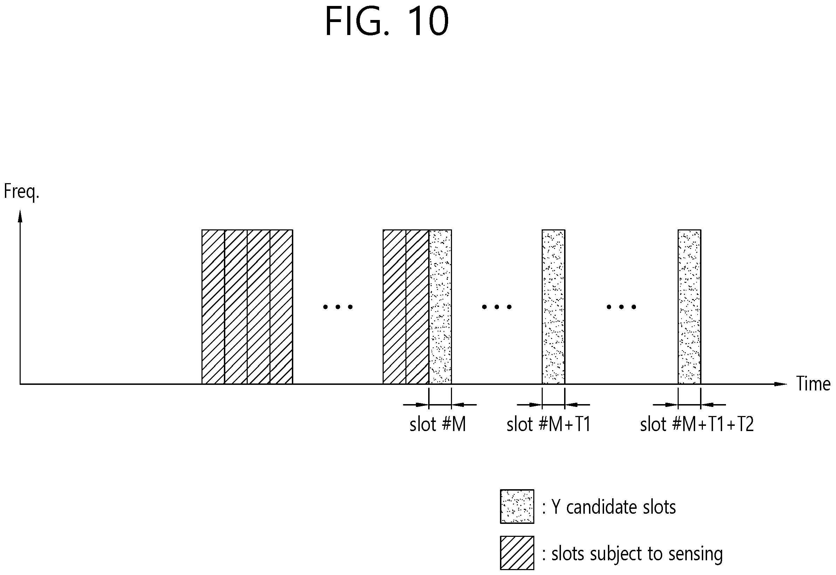

FIG. 10 shows a method for a UE to perform CPS, based on an embodiment of the present disclosure. The embodiment of FIG. 10 may be combined with various embodiments of the present disclosure.

In the embodiment of FIG. 10, it is assumed that Y candidate slots selected by the UE are the slot #M, the slot #(M+T1), and the slot #(M+T1+T2). In this case, slots for which the UE should perform sensing may be determined based on the first slot (i.e., slot #M) among the Y candidate slots. For example, after determining the first slot among the Y candidate slots as a reference slot, the UE may perform sensing for N slots (before) from the reference slot.

Referring to FIG. 10, based on the first slot (i.e., slot #M) among the Y candidate slots, the UE may perform sensing for N slots. For example, the UE may perform sensing for N slots before the slot #M, and the UE may select at least one SL resource within the Y candidate slots (i.e., slot #M, slot #(M+T1), and slot #(M+T1+T2)) based on the results of the sensing. For example, N may be configured or pre-configured for the UE. For example, there may be a time gap for processing between the slot #M and the last of the N slots.

For example, the UE that performs periodic transmission or performs aperiodic transmission in a resource pool in which at least periodic transmission is allowed may perform PPS, before the time n in which resource (re)selection is triggered, based on period values selected at the beginning of transmission by the UE implementation or period values set to specific configured values among periods configured in the resource pool. For example, the UE that performs periodic transmission or performs aperiodic transmission in a resource pool in which at least periodic transmission is allowed may perform PPS for resource re-evaluation and/or pre-emption checking, before the selected resource, based on period values selected at the beginning of transmission by the UE implementation or period values set to specific configured values among periods configured in the resource pool. For example, the UE may perform PPS based on period values set to the specific configured values in one period or period values selected at the beginning of transmission by the UE implementation, and a partial sensing pattern bitmap set to specific configured values or the number k value of an integer multiple of period values set/selected to specific configured values for each of the periods. Thereafter, the UE may perform periodic transmission or aperiodic transmission by using selected resource(s) based on the results of the PPS. Thereafter, the UE may receive ACK/NACK from the RX UE if HARQ feedback is allowed for the resource pool and/or if HARQ feedback is enabled for the transmission. Based on the received ACK/NACK, the UE may then determine a transmission period for retransmission of the transmission, initial transmission for the next period, or PPS for the next transmission.

Based on an embodiment of the present disclosure, after receiving the ACK, the UE may, based on transmission periods associated with PPS used to receive the ACK, exclude the number of transmission periods associated with PPS set to a specific configured value, for the retransmission of the transmission, the initial transmission for the next period, or the next transmission.

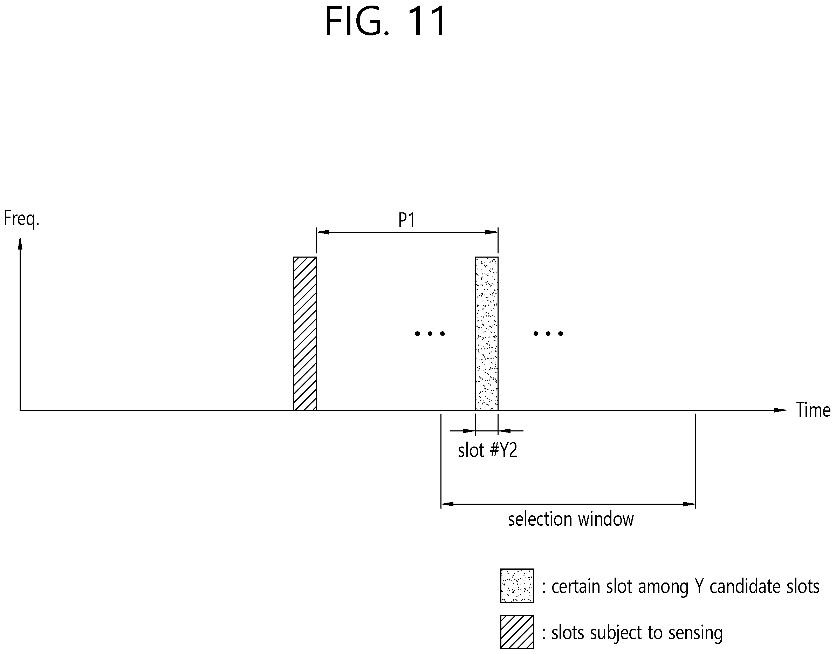

FIG. 11 shows a method for a UE to exclude the number of transmission periods associated with PPS set to a specific configured value, according to one embodiment of the present disclosure. The embodiment of FIG. 11 may be combined with various embodiments of the present disclosure.

Referring to FIGs. 8 and 11, it is assumed that the UE selects a SL resource in the slot #Y1 based on the resource reservation period P1 and the resource reservation period P2 as in the embodiment of FIG. 8. In this case, the UE may perform SL transmission based on the SL resource, and the UE may be successful in the SL transmission. For example, the UE may receive ACK for the SL transmission. In this case, the UE may perform PBPS for the slot #Y2 based on the resource reservation period P1, as shown in the embodiment of FIG. 11. That is, the UE may exclude the resource reservation period P2 from the set of resource reservation periods used for PBPS based on the ACK. In the embodiment of FIG. 11, the UE is assumed to exclude one resource reservation period from the set of resource reservation periods used for PBPS, but the technical ideas of the present disclosure are not limited to this. For example, the UE may exclude N resource reservation periods from the set of resource reservation periods used for PBPS, where N may be a positive integer.

Based on an embodiment of the present disclosure, after receiving the NACK, the UE may, based on transmission periods associated with PPS used to receive the NACK, add the number of transmission periods associated with PPS set to a specific configured value among transmission periods (pre-)configured in the resource pool, excluding the transmission periods associated with the PPS used to receive the NACK, for the retransmission of the transmission, the initial transmission for the next period, or the next transmission.

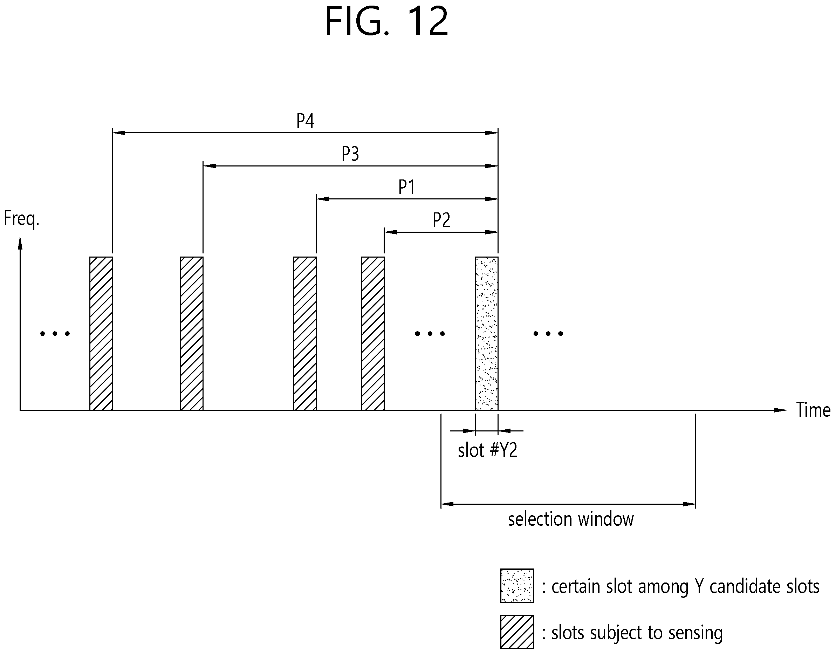

FIG. 12 shows a method for a UE to add the number of transmission periods associated with PPS set to a specific configured value, based on an embodiment of the present disclosure. The embodiment of FIG. 12 may be combined with various embodiments of the present disclosure.

Referring to FIGs. 8 and 12, it is assumed that the UE selects a SL resource in the slot #Y1 based on the resource reservation period P1 and the resource reservation period P2 as in the embodiment of FIG. 8. In this case, the UE may perform SL transmission based on the SL resource, and the UE may fail to perform the SL transmission. For example, the UE may receive NACK for the SL transmission, or the UE may not receive HARQ feedback for the SL transmission. In this case, the UE may perform PBPS for the slot #Y2 based on the resource reservation period P1, the resource reservation period P2, the resource reservation period P3, and the resource reservation period P4 as shown in the embodiment of FIG. 12. That is, the UE may include the resource reservation period P3 and the resource reservation period P4 in the set of resource reservation periods used for PBPS based on the NACK. In the embodiment of FIG. 12, it is assumed that the UE includes two resource reservation periods in the set of resource reservation periods used for PBPS, but the technical ideas of the present disclosure are not limited to this. For example, the UE may include M resource reservation periods in the set of resource reservation periods used for PBPS, where M may be a positive integer.

Based on an embodiment of the present disclosure, after receiving the ACK, the UE may, based on a bitmap indicating a partial sensing pattern or a location number k value of an integer multiple of transmission periods associated with PPS used to receive the ACK, decrease the number of 1s in the bitmap indicating the partial sensing pattern or the location number k value of the integer multiple of the transmission periods by a specific configured value, for the retransmission of the transmission, the initial transmission for the next period, or the next transmission. Herein, for example, the 1 in the bitmap may refer to sensing and the 0 in the bitmap may refer to no sensing. For example, the value k may refer to the number of integer multiples of transmission periods associated with PPS.

Based on an embodiment of the present disclosure, after receiving the NACK, the UE may, based on a bitmap indicating a partial sensing pattern or a location number k value of an integer multiple of transmission periods associated with PPS used to receive the NACK, increase the number of 1s in the bitmap indicating the partial sensing pattern or the location number k value of the integer multiple of the transmission periods by a specific configured value, for the retransmission of the transmission, the initial transmission for the next period, or the next transmission. Herein, for example, the 1 in the bitmap may refer to sensing and the 0 in the bitmap may refer to no sensing. For example, the value k may refer to the number of integer multiples of transmission periods associated with PPS.

Based on an embodiment of the present disclosure, a UE-A that performs resource selection based on full sensing or partial sensing may detect a conflict of a reserved transmission resource with a UE-B that performs resource selection based on random selection. Then, if a priority value of packet transmission of the UE-B is less than or equal to a specific threshold value and/or if the priority value of the packet transmission of the UE-B is less than a priority value of packet transmission of the UE-A, the UE-A may cancel the reserved resource selected by the UE-A such that the transmission of the UE-B can pre-empt the transmission of the UE-A. For example, if full sensing and/or partial sensing is allowed for the resource pool, the UE-B may select its transmission resources to be separated by a time interval greater than or equal to a time required for the resource conflict and the resource reselection to allow the UE-A to reselect the conflicted resource.

For example, a first UE that performs resource selection based on full sensing or partial sensing may detect a conflict of a reserved transmission resource with a second UE that performs resource selection based on random selection. In this case, if a priority value of packet transmission of the second UE is less than or equal to a specific threshold value and/or if a priority of the packet transmission of the second UE is higher than a priority of packet transmission of the first UE, the reservation for the reserved resource selected by the first UE may be canceled such that the transmission of the second UE can pre-empt the transmission of the first UE. For example, if full sensing and/or partial sensing is allowed for the resource pool, the second UE may select transmission resources to be separated by a time interval greater than or equal to a time required for the resource conflict and the resource reselection to allow the first UE to reselect the conflicted resource.

For example, a first UE that performs resource selection based on full sensing or partial sensing may detect a conflict of a reserved transmission resource with a second UE that performs resource selection based on random selection. In this case, if a priority value of packet transmission of the second UE is less than or equal to a specific threshold value and/or if a priority of the packet transmission of the second UE is higher than a priority of packet transmission of the first UE, the reservation for the reserved resource selected by the second UE may be canceled such that the transmission of the first UE can pre-empt the transmission of the second UE. For example, if full sensing and/or partial sensing is allowed for the resource pool, the first UE may select transmission resources to be separated by a time interval greater than or equal to a time required for the resource conflict and the resource reselection to allow the second UE to reselect the conflicted resource.

Based on an embodiment of the present disclosure, after completing a PC5-RRC setup for performing unicast-based communication, two UEs performing unicast-based communication may perform packet transmission required for unicast communication by using a specific dedicated resource pool available only to the two UEs. For example, a SL DRX configuration available to or used by the two UEs may be configured specifically for the dedicated resource pool. For example, the SL DRX configuration available to or used by the two UEs may be the same. For example, the dedicated resource pool may overlap with a dedicated resource pool used for unicast between the two UEs and two other UEs. For example, the dedicated resource pool may not overlap with a dedicated resource pool used for unicast between the two UEs and two other UEs.

Based on an embodiment of the present disclosure, a time interval between a temporally earliest resource and a temporally latest resource signaled by SCI transmitted by a power saving UE performing resource selection based on partial sensing or random resource selection may be smaller than a time interval between a temporally earliest resource and a temporally latest resource signaled by SCI transmitted by a vehicle UE performing resource selection based on full sensing. For example, if resource re-evaluation and/or pre-emption checking is allowed or enabled in the resource pool, the time interval between the temporally earliest resource and the temporally latest resource signaled by the SCI transmitted by the power saving UE may be smaller than the time interval between the temporally earliest resource and the temporally latest resource signaled by the SCI transmitted by the vehicle UE. For example, the time interval signaled by the SCI transmitted by the power saving UE may be less than 32 slots. For example, the power saving UE may signal, through the SCI, only transmission resources in which the time interval between the temporally earliest resource and the temporally latest resource is less than or equal to a value set to a specific threshold value.

For example, in the resource pool, the power saving UE may select only resources that are separated by a time interval determined by a specific configured value. Alternatively, for example, in the resource pool, the power saving UE may select only resources that are separated by a time interval less than or equal to a time interval determined by a specific threshold value. For example, the power saving UE may signal, through the SCI, only resources that are separated by a time interval determined by a specific configured value. Alternatively, the power saving UE may signal, through the SCI, only resources that are separated by a time interval less than or equal to a time interval determined by a specific threshold value.

For example, in the resource pool, the power saving UE may select only transmission resources that are separated by a time interval equal to a multiple of an integer set to a specific configured value, and the power saving UE may signal the location of the transmission resources through SCI.

For example, in the case of SCI transmitted by the power saving UE in the resource pool, the time/frequency location of the transmission resource may be pre-defined or configured by the network. Alternatively, for example, the power saving UE may only signal resources at the location determined by pre-configured specific rules through the SCI. The specific rules may be, for example, rules that only allow slots with even indexes or odd indexes. For example, the specific rules may be rules that only allow slots with indexes corresponding to multiples of a specific configured value.

As an example of such the specific rules, after a time/frequency offset location set to a specific configured value from a specific reference time/frequency location (e.g., at the time of SFN=0 or DFN=0), only continuous slots/subchannels/resources within a time/frequency range set to a specific configured value may be allowed for each period set to a specific configured value. For example, the specific rules may be configured independently/differently for different slots/subchannels/resources.

Based on various embodiments of the present disclosure, the UE performing partial sensing can efficiently select resources, thereby minimizing power consumption of the UE.

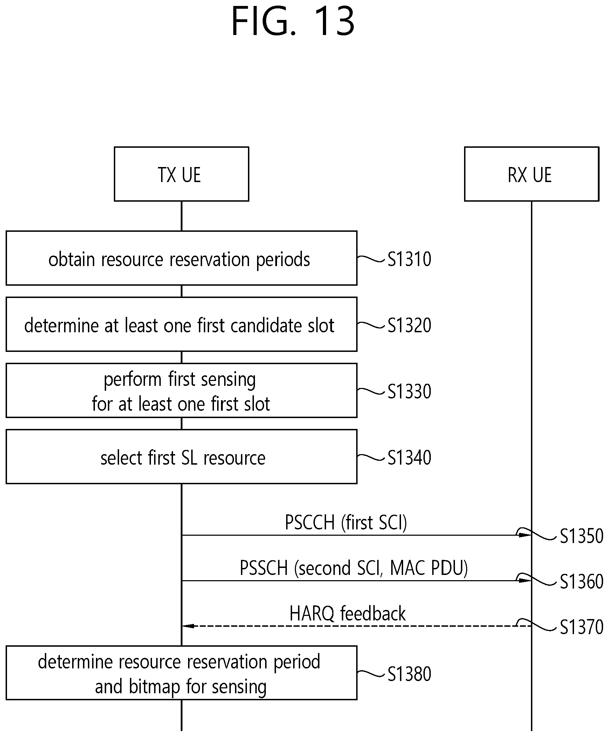

FIG. 13 shows a procedure for a transmission UE to perform partial sensing, based on an embodiment of the present disclosure. The embodiment of FIG. 13 may be combined with various embodiments of the present disclosure.

Referring to FIG. 13, in step S1310, the transmitting UE may obtain a plurality of resource reservation periods configured in a resource pool. In step S1320, the transmitting UE may determine at least one first candidate slot for selecting a sidelink (SL) resource.

In step S1330, the transmitting UE may perform first sensing for at least one first slot related to the at least one first candidate slot, based on at least one first resource reservation period of the plurality of resource reservation periods. In step S1340, the transmitting UE may select a first SL resource based on the first sensing.

In step S1350, the transmitting UE may transmit first sidelink control information (SCI) including information for scheduling of a physical sidelink shared channel (PSSCH) through a physical sidelink control channel (PSCCH) based on the first SL resource. In step S1360, the transmitting UE may transmit second SCI and a MAC PDU through the PSSCH based on the first SL resource.

In step S1370, the transmitting UE may receive hybrid automatic repeat request (HARQ) feedback for the MAC PDU. In this case, the HARQ feedback may be ACK or NACK. Alternatively, for example, the transmitting UE may fail to receive HARQ feedback for the MAC PDU. In this case, the transmitting UE may determine that the receiving UE failed to receive the MAC PDU (i.e., NACK).

In step S1380, the transmitting UE may determine, based on the HARQ feedback and the at least one first resource reservation period, at least one second resource reservation period for selecting a second SL resource among the plurality of resource reservation periods. Additionally, for example, the transmitting UE may determine, based on the HARQ feedback, a bitmap for partial sensing.

For example, based on that the HARQ feedback is determined to be ACK, the at least one second resource reservation period for selecting the second SL resource may be obtained by excluding a configured number of resource reservation periods from the at least one first resource reservation period.

For example, based on that the HARQ feedback is determined to be ACK, the at least one second resource reservation period for selecting the second SL resource may be obtained by excluding one or more resource reservation periods related to the at least one first resource reservation period.

For example, based on that the HARQ feedback is determined to be NACK, the at least one second resource reservation period for selecting the second SL resource may be obtained by adding one or more resource reservation periods of the plurality of resource reservation periods to the at least one first resource reservation period. For example, the at least one second resource reservation period may be obtained by adding a configured number of resource reservation periods of the plurality of resource reservation periods, excluding the at least one first resource reservation period, to the at least one first resource reservation period.

For example, based on that the HARQ feedback is determined to be ACK, a second bitmap for selecting the second SL resource may be obtained by changing some bits to 0 among at least one bit set to 1 in a first bitmap for selecting the first SL resource.

For example, based on that the HARQ feedback is determined to be NACK, a second bitmap for selecting the second SL resource may be obtained by changing some bits to 1 among at least one bit set to 0 in a first bitmap for selecting the first SL resource.

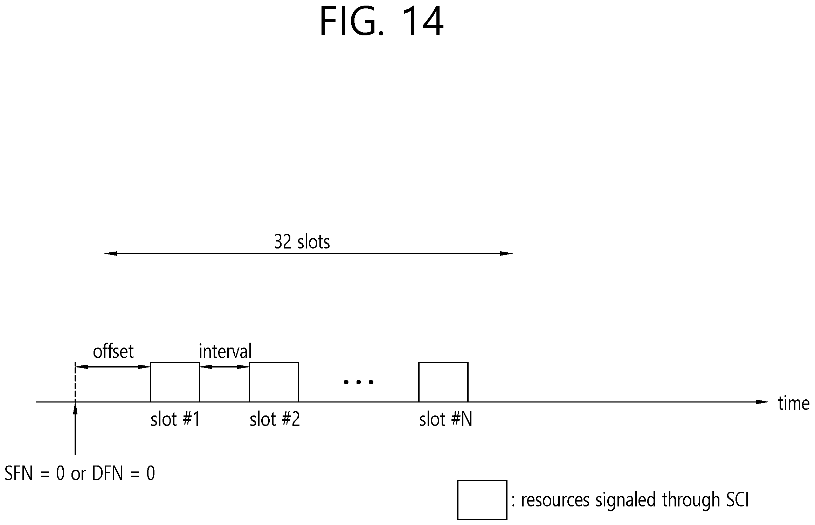

FIG. 14 shows an example of resources being signaled through SCI, based on an embodiment of the present disclosure. The embodiment of FIG. 14 may be combined with various embodiments of the present disclosure.

Referring to FIG. 14, for example, a UE performing partial sensing for power saving may set a time interval between a temporally earliest resource (slot #1) and a temporally latest resource (slot #N) signaled through SCI to be smaller than a time interval between a temporally earliest resource and a temporally latest resource signaled through SCI by a UE performing full sensing. For example, the time interval signaled by the SCI transmitted by the power saving UE may be less than 32 slots.

For example, if resource re-evaluation and/or pre-emption checking is allowed or enabled in a resource pool, the UE performing partial sensing for power saving may set the time interval between the temporally earliest resource (slot #1) and the temporally latest resource (slot #N) signaled through the SCI to be smaller than the time interval between the temporally earliest resource and the temporally latest resource signaled through the SCI by the UE performing full sensing. For example, the time interval signaled by the SCI transmitted by the power saving UE may be less than 32 slots.

For example, the UE may signal, through the SCI, only transmission resources in which the time interval between the temporally earliest resource (slot #1) and the temporally latest resource (slot #N) is less than or equal to a value set to a specific threshold value. Herein, for example, the UE may be a UE that performs partial sensing for power saving.

For example, the UE may select only resources that are separated by a time interval determined by a specific configured value. Alternatively, for example, the UE may only select resources that are separated by a time interval less than or equal to a time interval determined by a specific threshold value. For example, the UE may signal, through the SCI, only resources that are separated by a time interval determined by a specific configured value. Alternatively, the UE may signal, through the SCI, only resources that are separated by a time interval less than or equal to a time interval determined by a specific threshold value. Herein, for example, the UE may be a UE that performs partial sensing for power saving.

For example, the UE may select only transmission resources that are separated by a time interval equal to a multiple of an integer set to a specific configured value, and the UE may signal the location of the transmission resources through SCI. Herein, for example, the UE may be a UE that performs partial sensing for power saving.

For example, in the case of SCI transmitted by the UE, the time/frequency location of the transmission resource may be pre-defined or configured by the network. Alternatively, for example, the UE may only signal resources at the location determined by pre-configured specific rules through the SCI. The specific rules may be, for example, rules that allow only slots with even indexes or odd indexes. For example, the specific rules may be rules that only allow slots with indexes corresponding to multiples of a specific configured value. Herein, for example, the UE may be a UE that performs partial sensing for power saving.

For example, after a time/frequency offset location set to a specific configured value from a specific reference time/frequency location (e.g., at the time of SFN=0 or DFN=0), only continuous slots within a time/frequency range set to a specific configured value may be allowed for each period set to a specific configured value. For example, the specific rules may be configured independently/differently for different slots.

Based on various embodiments of the present disclosure, if the UE performing partial sensing receives HARQ ACK, power due to partial sensing can be further reduced by reducing the number of sensing periods for retransmission. Furthermore, if the UE performing partial sensing receives HARQ NACK, the success rate of sidelink data transmission can be further increased by increasing the number of sensing periods for retransmission. In addition, by selecting transmission resources such that transmission resources are widely spaced in time, taking into account packet transmission pre-empted by packet transmission with a higher priority, the probability of resource conflict can be reduced if another UE performs resource reselection.

For example, whether the rule is applied and/or the proposed method/rule related parameter value of the present disclosure may be configured/allowed specifically (or differently or independently) for a service type. For example, whether the rule is applied and/or the proposed method/rule related parameter value of the present disclosure may be configured/allowed specifically (or differently or independently) for a (LCH or service) priority. For example, whether the rule is applied and/or the proposed method/rule related parameter value of the present disclosure may be configured/allowed specifically (or differently or independently) for a QoS requirement (e.g., latency, reliability, minimum communication range). For example, whether the rule is applied and/or the proposed method/rule related parameter value of the present disclosure may be configured/allowed specifically (or differently or independently) for a PQI parameter. For example, whether the rule is applied and/or the proposed method/rule related parameter value of the present disclosure may be configured/allowed specifically (or differently or independently) for a HARQ feedback ENABLED LCH/MAC PDU (transmission). For example, whether the rule is applied and/or the proposed method/rule related parameter value of the present disclosure may be configured/allowed specifically (or differently or independently) for a HARQ feedback DISABLED LCH/MAC PDU (transmission). For example, whether the rule is applied and/or the proposed method/rule related parameter value of the present disclosure may be configured/allowed specifically (or differently or independently) for a CBR measurement value of a resource pool. For example, whether the rule is applied and/or the proposed method/rule related parameter value of the present disclosure may be configured/allowed specifically (or differently or independently) for a SL cast type (e.g., unicast, groupcast, broadcast). For example, whether the rule is applied and/or the proposed method/rule related parameter value of the present disclosure may be configured/allowed specifically (or differently or independently) for a SL groupcast HARQ feedback option (e.g., NACK only feedback, ACK/NACK feedback, NACK only feedback based on TX-RX distance). For example, whether the rule is applied and/or the proposed method/rule related parameter value of the present disclosure may be configured/allowed specifically (or differently or independently) for a SL mode 1 CG type (e.g., SL CG type 1 or SL CG type 2). For example, whether the rule is applied and/or the proposed method/rule related parameter value of the present disclosure may be configured/allowed specifically (or differently or independently) for a SL mode type (e.g., mode 1 or mode 2). For example, whether the rule is applied and/or the proposed method/rule related parameter value of the present disclosure may be configured/allowed specifically (or differently or independently) for a resource pool. For example, whether the rule is applied and/or the proposed method/rule related parameter value of the present disclosure may be configured/allowed specifically (or differently or independently) for whether a PSFCH resource is a configured resource pool. For example, whether the rule is applied and/or the proposed method/rule related parameter value of the present disclosure may be configured/allowed specifically (or differently or independently) for a source (L2) ID. For example, whether the rule is applied and/or the proposed method/rule related parameter value of the present disclosure may be configured/allowed specifically (or differently or independently) for a destination (L2) ID. For example, whether the rule is applied and/or the proposed method/rule related parameter value of the present disclosure may be configured/allowed specifically (or differently or independently) for a PC5 RRC connection link. For example, whether the rule is applied and/or the proposed method/rule related parameter value of the present disclosure may be configured/allowed specifically (or differently or independently) for a SL link. For example, whether the rule is applied and/or the proposed method/rule related parameter value of the present disclosure may be configured/allowed specifically (or differently or independently) for a connection state (e.g., RRC CONNECTED state, IDLE state, INACTIVE state) (with a base station). For example, whether the rule is applied and/or the proposed method/rule related parameter value of the present disclosure may be configured/allowed specifically (or differently or independently) for a SL HARQ process (ID). For example, whether the rule is applied and/or the proposed method/rule related parameter value of the present disclosure may be configured/allowed specifically (or differently or independently) for whether to perform SL DRX operation (of TX UE or RX UE). For example, whether the rule is applied and/or the proposed method/rule related parameter value of the present disclosure may be configured/allowed specifically (or differently or independently) for whether a power saving (TX or RX) UE. For example, whether the rule is applied and/or the proposed method/rule related parameter value of the present disclosure may be configured/allowed specifically (or differently or independently) for a case where (from a specific UE perspective) PSFCH TX and PSFCH RX (and/or a plurality of PSFCH TX (exceeding UE capabilities)) overlap (and/or PSFCH TX (and/or PSFCH RX) is omitted). For example, whether the rule is applied and/or the proposed method/rule related parameter value of the present disclosure may be configured/allowed specifically (or differently or independently) for a case where the RX UE actually (successfully) receives PSCCH (and/or PSSCH) (re)transmission from the TX UE.

For example, in the present disclosure, the term "configure/configured (or designate/designated)" may be extended and interpreted as a form in which the base station informs the UE through a pre-defined (physical layer or higher layer) channel/signal (e.g., SIB, RRC, MAC CE) (and/or a form in which the UE informs other UEs through a pre-defined (physical layer or higher layer) channel/signal (e.g., SL MAC CE, PC5 RRC)).

For example, in the present disclosure, the term "PSFCH" may be extended and interpreted as (NR or LTE) PSSCH (and/or (NR or LTE) PSCCH) (and/or (NR or LTE) SL SSB (and/or UL channel/signal)). In addition, the proposed methods of the present disclosure may be used in combination with each other (as a new type).

For example, in the present disclosure, a specific threshold may refer to a threshold pre-defined or (pre-)configured by the network or the base station or the upper layer (including the application layer) of the UE. For example, in the present disclosure, a specific configured threshold may refer to a value pre-defined or (pre-)configured by the network or the base station or the upper layer (including the application layer) of the UE. For example, the operation configured by the network/base station may refer to the operation in which the base station (pre-)configures to the UE through higher layer RRC signaling, configures/signals to the UE through MAC CE, or signals the UE through DCI.

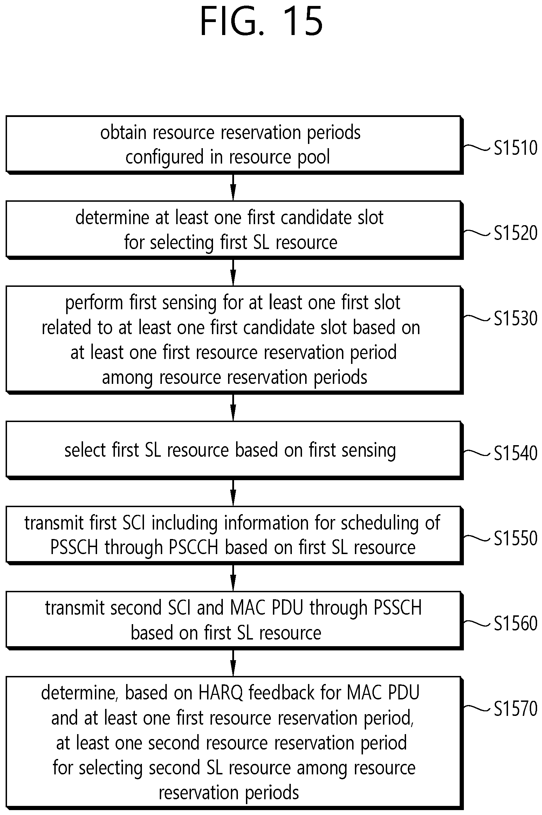

FIG. 15 shows a method for a first device to perform wireless communication, based on an embodiment of the present disclosure. The embodiment of FIG. 15 may be combined with various embodiments of the present disclosure.

Referring to FIG. 15, in step S1510, the first device may obtain a plurality of resource reservation periods configured in a resource pool. In step S1520, the first device may determine at least one first candidate slot for selecting a first sidelink (SL) resource. In step S1530, the first device may perform first sensing for at least one first slot related to the at least one first candidate slot based on at least one first resource reservation period among the plurality of resource reservation periods. In step S1540, the first device may select the first SL resource based on the first sensing. In step S1550, the first device may transmit first sidelink control information (SCI) including information for scheduling of a physical sidelink shared channel (PSSCH) through a physical sidelink control channel (PSCCH) based on the first SL resource. In step S1560, the first device may transmit second SCI and a media access control (MAC) protocol data unit (PDU) through the PSSCH based on the first SL resource. In step S1570, the first device may determine, based on hybrid automatic repeat request (HARQ) feedback for the MAC PDU and the at least one first resource reservation period, at least one second resource reservation period for selecting a second SL resource among the plurality of resource reservation periods.

For example, based on that the HARQ feedback is a positive acknowledgement (ACK), the at least one second resource reservation period for selecting the second SL resource may be determined by excluding N resource reservation periods from the at least one first resource reservation period, and N may be a positive integer. For example, the N resource reservation periods may be some of resource reservation periods among the at least one first resource reservation period used to select the first SL resource.

For example, based on that the HARQ feedback is a negative acknowledgment (NACK), the at least one second resource reservation period for selecting the second SL resource may be determined by including M resource reservation periods in the at least one first resource reservation period, and M may be a positive integer. For example, the M resource reservation periods may include at least one resource reservation period that is not used to select the first SL resource among the plurality of resource reservation periods.

Additionally, for example, the first device may determine at least one second candidate slot for selecting the second SL resource. Additionally, for example, the first device may perform second sensing for at least one second slot related to the at least one second candidate slot based on the at least one second resource reservation period. Additionally, for example, the first device may select the second SL resource based on the second sensing.

For example, the first sensing for the at least one first slot related to the at least one first candidate slot may be performed based on the at least one first resource reservation period and a first bitmap, and the second sensing for the at least one second slot related to the at least one second candidate slot may be performed based on the at least one second resource reservation period and a second bitmap. For example, based on that the HARQ feedback is a positive ACK, the second bitmap may be obtained by changing K bits to 0 among at least one bit set to 1 in the first bitmap, and K may be a positive integer. For example, based on that the HARQ feedback is a NACK, the second bitmap may be obtained by changing L bits to 1 among at least one bit set to 0 in the first bitmap, and L may be a positive integer.

For example, an interval between a plurality of resources selected by a second device based on random selection may be greater than or equal to a threshold, and the second device may not be allowed to select a plurality of resources having an interval smaller than the threshold based on the random selection.

For example, based on that a unicast connection is established between the first device and a second device, unicast communication between the first device and the second device may be performed based on a dedicated resource pool for the first device and the second device.

For example, a maximum time interval between resources that the first device requiring power saving is allowed to inform through time resource assignment information included in the first SCI may be smaller than a maximum time interval between resources that a third device not requiring power saving is allowed to inform through time resource assignment information included in third SCI.

For example, a time domain or a frequency domain of resources selectable by the first device requiring power saving may be configured for the first device. For example, the time domain may be determined based on at least one of a specific time offset, a specific time period, or a specific number of slots, with respect to a specific reference time, and the frequency domain may be determined based on at least one of a specific frequency offset, a specific frequency period, or a specific number of subchannels, with respect to a specific reference frequency, and the first device requiring power saving may not be allowed to select resources other than the time domain or the frequency domain. For example, the time domain may be determined based on at least one of a specific time offset, a specific time period, or a specific number of consecutive slots, with respect to a specific reference time, and the frequency domain may be determined based on at least one of a specific frequency offset, a specific frequency period, or a specific number of consecutive subchannels, with respect to a specific reference frequency, and the first device requiring power saving may not be allowed to select resources other than the time domain or the frequency domain.

The proposed method can be applied to the device(s) based on various embodiments of the present disclosure. First, the processor 102 of the first device 100 may obtain a plurality of resource reservation periods configured in a resource pool. In addition, the processor 102 of the first device 100 may determine at least one first candidate slot for selecting a first sidelink (SL) resource. In addition, the processor 102 of the first device 100 may perform first sensing for at least one first slot related to the at least one first candidate slot based on at least one first resource reservation period among the plurality of resource reservation periods. In addition, the processor 102 of the first device 100 may select the first SL resource based on the first sensing. In addition, the processor 102 of the first device 100 may control the transceiver 106 to transmit first sidelink control information (SCI) including information for scheduling of a physical sidelink shared channel (PSSCH) through a physical sidelink control channel (PSCCH) based on the first SL resource. In addition, the processor 102 of the first device 100 may control the transceiver 106 to transmit second SCI and a media access control (MAC) protocol data unit (PDU) through the PSSCH based on the first SL resource. In addition, the processor 102 of the first device 100 may determine, based on hybrid automatic repeat request (HARQ) feedback for the MAC PDU and the at least one first resource reservation period, at least one second resource reservation period for selecting a second SL resource among the plurality of resource reservation periods.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: obtain a plurality of resource reservation periods configured in a resource pool; determine at least one first candidate slot for selecting a first sidelink (SL) resource; perform first sensing for at least one first slot related to the at least one first candidate slot based on at least one first resource reservation period among the plurality of resource reservation periods; select the first SL resource based on the first sensing; transmit first sidelink control information (SCI) including information for scheduling of a physical sidelink shared channel (PSSCH) through a physical sidelink control channel (PSCCH) based on the first SL resource; transmit second SCI and a media access control (MAC) protocol data unit (PDU) through the PSSCH based on the first SL resource; and determine, based on hybrid automatic repeat request (HARQ) feedback for the MAC PDU and the at least one first resource reservation period, at least one second resource reservation period for selecting a second SL resource among the plurality of resource reservation periods.

Based on an embodiment of the present disclosure, an apparatus adapted to control a first user equipment (UE) may be provided. For example, the apparatus may comprise: one or more processors; and one or more memories operably connected to the one or more processors and storing instructions. For example, the one or more processors may execute the instructions to: obtain a plurality of resource reservation periods configured in a resource pool; determine at least one first candidate slot for selecting a first sidelink (SL) resource; perform first sensing for at least one first slot related to the at least one first candidate slot based on at least one first resource reservation period among the plurality of resource reservation periods; select the first SL resource based on the first sensing; transmit first sidelink control information (SCI) including information for scheduling of a physical sidelink shared channel (PSSCH) through a physical sidelink control channel (PSCCH) based on the first SL resource; transmit second SCI and a media access control (MAC) protocol data unit (PDU) through the PSSCH based on the first SL resource; and determine, based on hybrid automatic repeat request (HARQ) feedback for the MAC PDU and the at least one first resource reservation period, at least one second resource reservation period for selecting a second SL resource among the plurality of resource reservation periods.

Based on an embodiment of the present disclosure, a non-transitory computer-readable storage medium storing instructions may be provided. For example, the non-transitory computer-readable storage medium storing instructions, when executed, may cause a first device to: obtain a plurality of resource reservation periods configured in a resource pool; determine at least one first candidate slot for selecting a first sidelink (SL) resource; perform first sensing for at least one first slot related to the at least one first candidate slot based on at least one first resource reservation period among the plurality of resource reservation periods; select the first SL resource based on the first sensing; transmit first sidelink control information (SCI) including information for scheduling of a physical sidelink shared channel (PSSCH) through a physical sidelink control channel (PSCCH) based on the first SL resource; transmit second SCI and a media access control (MAC) protocol data unit (PDU) through the PSSCH based on the first SL resource; and determine, based on hybrid automatic repeat request (HARQ) feedback for the MAC PDU and the at least one first resource reservation period, at least one second resource reservation period for selecting a second SL resource among the plurality of resource reservation periods.

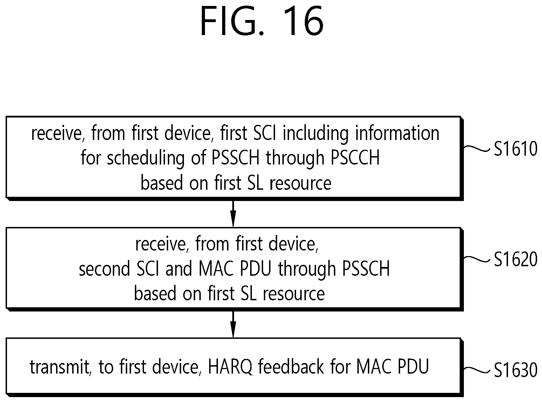

FIG. 16 shows a method for a second device to perform wireless communication, based on an embodiment of the present disclosure. The embodiment of FIG. 16 may be combined with various embodiments of the present disclosure.

Referring to FIG. 16, in step S1610, the second device may receive, from a first device, first sidelink control information (SCI) including information for scheduling of a physical sidelink shared channel (PSSCH) through a physical sidelink control channel (PSCCH) based on a first sidelink (SL) resource. In step S 1620, the second device may receive, from the first device, second SCI and a media access control (MAC) protocol data unit (PDU) through the PSSCH based on the first SL resource. In step S1630, the second device may transmit, to the first device, hybrid automatic repeat request (HARQ) feedback for the MAC PDU. For example, the first SL resource may be selected based on sensing performed based on at least one first resource reservation period among a plurality of resource reservation periods configured in a resource pool, and at least one second resource reservation period for selecting a second SL resource may be determined among the plurality of resource reservation periods based on the HARQ feedback and the at least one first resource reservation period.

The proposed method can be applied to the device(s) based on various embodiments of the present disclosure. First, the processor 202 of the second device 200 may control transceiver 206 to receive, from a first device, first sidelink control information (SCI) including information for scheduling of a physical sidelink shared channel (PSSCH) through a physical sidelink control channel (PSCCH) based on a first sidelink (SL) resource. In addition, the processor 202 of the second device 200 may control transceiver 206 to receive, from the first device, second SCI and a media access control (MAC) protocol data unit (PDU) through the PSSCH based on the first SL resource. In addition, the processor 202 of the second device 200 may control transceiver 206 to transmit, to the first device, hybrid automatic repeat request (HARQ) feedback for the MAC PDU. For example, the first SL resource may be selected based on sensing performed based on at least one first resource reservation period among a plurality of resource reservation periods configured in a resource pool, and at least one second resource reservation period for selecting a second SL resource may be determined among the plurality of resource reservation periods based on the HARQ feedback and the at least one first resource reservation period.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: receive, from a first device, first sidelink control information (SCI) including information for scheduling of a physical sidelink shared channel (PSSCH) through a physical sidelink control channel (PSCCH) based on a first sidelink (SL) resource; receive, from the first device, second SCI and a media access control (MAC) protocol data unit (PDU) through the PSSCH based on the first SL resource; and transmit, to the first device, hybrid automatic repeat request (HARQ) feedback for the MAC PDU. For example, the first SL resource may be selected based on sensing performed based on at least one first resource reservation period among a plurality of resource reservation periods configured in a resource pool, and at least one second resource reservation period for selecting a second SL resource may be determined among the plurality of resource reservation periods based on the HARQ feedback and the at least one first resource reservation period.

Based on an embodiment of the present disclosure, an apparatus adapted to control a second user equipment (UE) may be provided. For example, the apparatus may comprise: one or more processors; and one or more memories operably connected to the one or more processors and storing instructions. For example, the one or more processors may execute the instructions to: receive, from a first UE, first sidelink control information (SCI) including information for scheduling of a physical sidelink shared channel (PSSCH) through a physical sidelink control channel (PSCCH) based on a first sidelink (SL) resource; receive, from the first UE, second SCI and a media access control (MAC) protocol data unit (PDU) through the PSSCH based on the first SL resource; and transmit, to the first UE, hybrid automatic repeat request (HARQ) feedback for the MAC PDU. For example, the first SL resource may be selected based on sensing performed based on at least one first resource reservation period among a plurality of resource reservation periods configured in a resource pool, and at least one second resource reservation period for selecting a second SL resource may be determined among the plurality of resource reservation periods based on the HARQ feedback and the at least one first resource reservation period.

Based on an embodiment of the present disclosure, a non-transitory computer-readable storage medium storing instructions may be provided. For example, the non-transitory computer-readable storage medium storing instructions, when executed, may cause a second device to: receive, from a first device, first sidelink control information (SCI) including information for scheduling of a physical sidelink shared channel (PSSCH) through a physical sidelink control channel (PSCCH) based on a first sidelink (SL) resource; receive, from the first device, second SCI and a media access control (MAC) protocol data unit (PDU) through the PSSCH based on the first SL resource; and transmit, to the first device, hybrid automatic repeat request (HARQ) feedback for the MAC PDU. For example, the first SL resource may be selected based on sensing performed based on at least one first resource reservation period among a plurality of resource reservation periods configured in a resource pool, and at least one second resource reservation period for selecting a second SL resource may be determined among the plurality of resource reservation periods based on the HARQ feedback and the at least one first resource reservation period.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

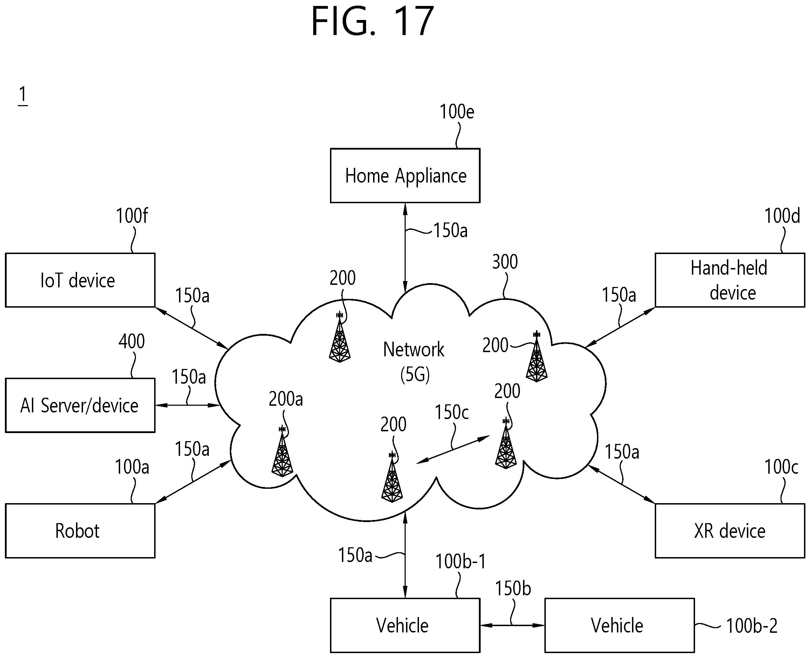

FIG. 17 shows a communication system 1, based on an embodiment of the present disclosure. The embodiment of FIG. 17 may be combined with various embodiments of the present disclosure.

Referring to FIG. 17, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB 1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

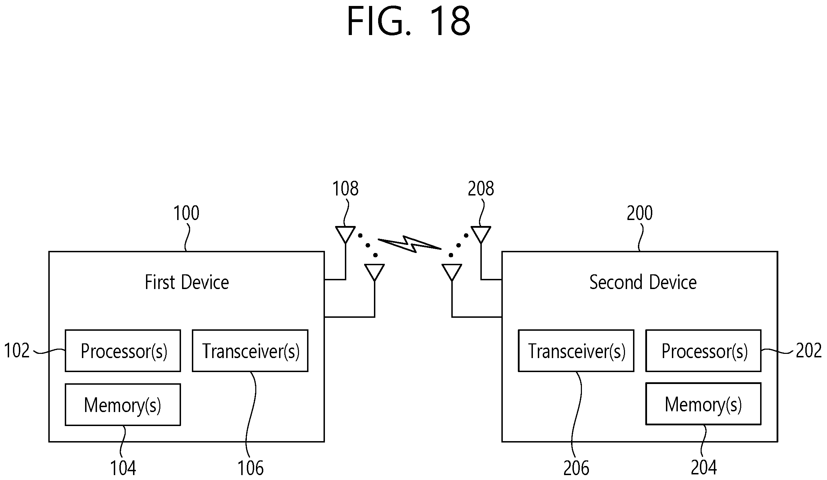

FIG. 18 shows wireless devices, based on an embodiment of the present disclosure. The embodiment of FIG. 18 may be combined with various embodiments of the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

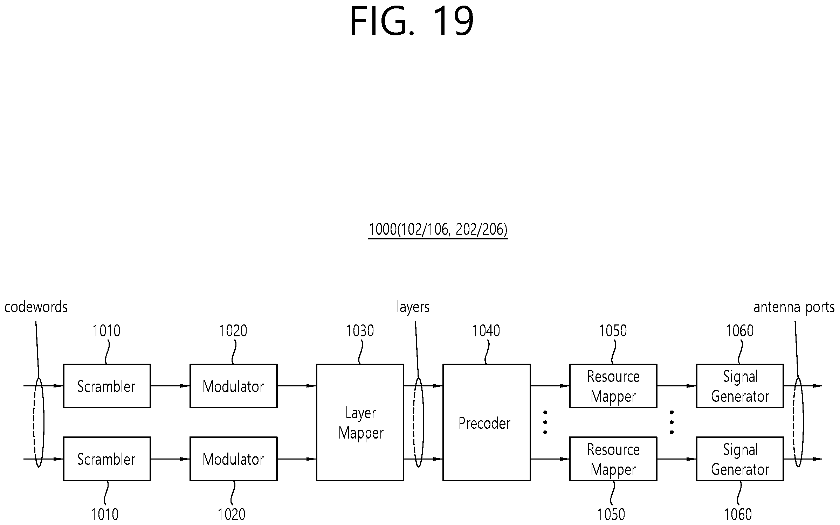

FIG. 19 shows a signal process circuit for a transmission signal, based on an embodiment of the present disclosure. The embodiment of FIG. 19 may be combined with various embodiments of the present disclosure.

Referring to FIG. 19, a signal processing circuit 1000 may include scramblers 1010, modulators 1020, a layer mapper 1030, a precoder 1040, resource mappers 1050, and signal generators 1060. An operation/function of FIG. 19 may be performed, without being limited to, the processors 102 and 202 and/or the transceivers 106 and 206 of FIG. 18. Hardware elements of FIG. 19 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 19. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 19. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

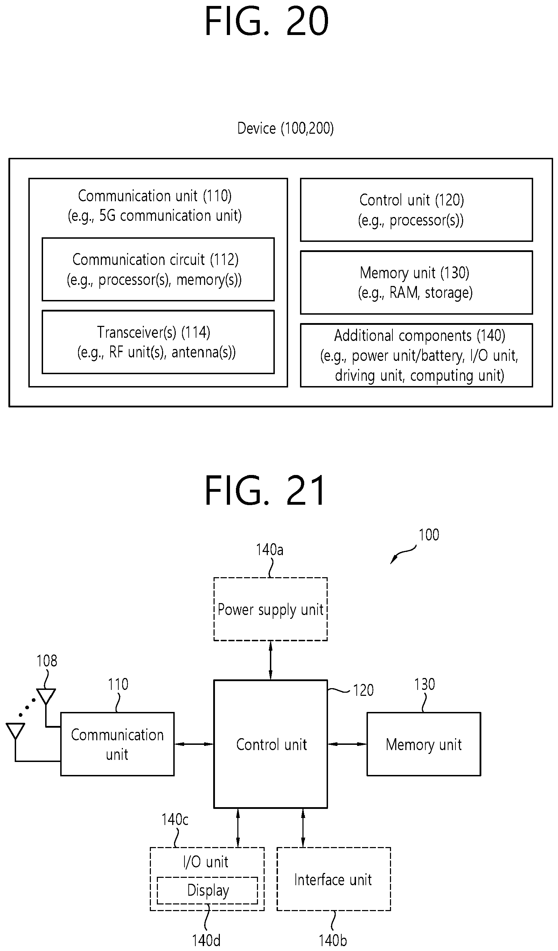

FIG. 20 shows another example of a wireless device, based on an embodiment of the present disclosure. The wireless device may be implemented in various forms according to a use-case/service (refer to FIG. 17). The embodiment of FIG. 20 may be combined with various embodiments of the present disclosure.

Referring to FIG. 20, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 20 will be described in detail with reference to the drawings.

FIG. 21 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 21 may be combined with various embodiments of the present disclosure.

Referring to FIG. 21, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 20, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

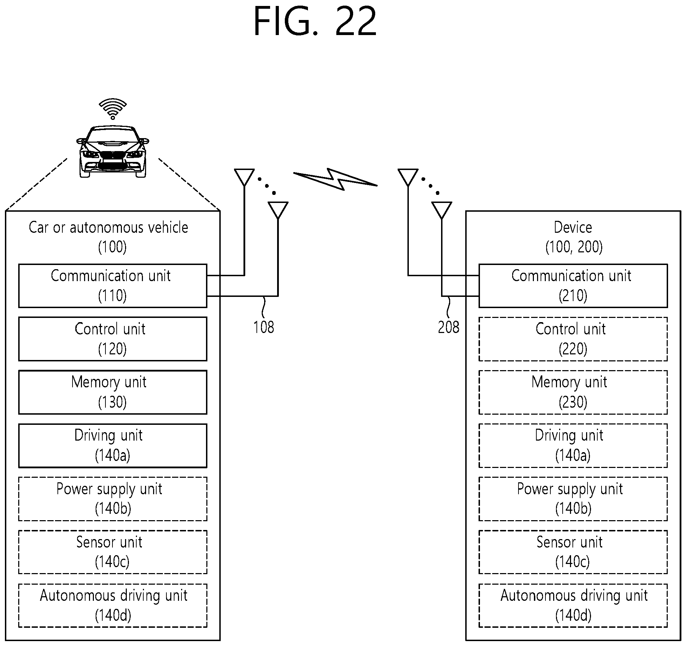

FIG. 22 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 22 may be combined with various embodiments of the present disclosure.

Referring to FIG. 22, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:

   obtaining a plurality of resource reservation periods configured in a resource pool;
   determining at least one first candidate slot for selecting a first sidelink (SL) resource;
   performing first sensing for at least one first slot related to the at least one first candidate slot based on at least one first resource reservation period among the plurality of resource reservation periods;
   selecting the first SL resource based on the first sensing;
   transmitting first sidelink control information (SCI) including information for scheduling of a physical sidelink shared channel (PSSCH) through a physical sidelink control channel (PSCCH) based on the first SL resource;
   transmitting second SCI and a media access control (MAC) protocol data unit (PDU) through the PSSCH based on the first SL resource; and
   determining, based on hybrid automatic repeat request (HARQ) feedback for the MAC PDU and the at least one first resource reservation period, at least one second resource reservation period for selecting a second SL resource among the plurality of resource reservation periods.

**2.** The method of claim 1, wherein, based on that the HARQ feedback is a positive acknowledgement (ACK), the at least one second resource reservation period for selecting the second SL resource is determined by excluding N resource reservation periods from the at least one first resource reservation period, and
wherein N is a positive integer.

**3.** The method of claim 2, wherein the N resource reservation periods are some of resource reservation periods among the at least one first resource reservation period used to select the first SL resource.

**4.** The method of claim 1, wherein, based on that the HARQ feedback is a negative acknowledgment (NACK), the at least one second resource reservation period for selecting the second SL resource is determined by including M resource reservation periods in the at least one first resource reservation period, and
wherein M is a positive integer.

**5.** The method of claim 4, wherein the M resource reservation periods include at least one resource reservation period that is not used to select the first SL resource among the plurality of resource reservation periods.

**6.** The method of claim 1, further comprising:

determining at least one second candidate slot for selecting the second SL resource;
performing second sensing for at least one second slot related to the at least one second candidate slot based on the at least one second resource reservation period; and
selecting the second SL resource based on the second sensing.

**7.** The method of claim 6, wherein the first sensing for the at least one first slot related to the at least one first candidate slot is performed based on the at least one first resource reservation period and a first bitmap, and
wherein the second sensing for the at least one second slot related to the at least one second candidate slot is performed based on the at least one second resource reservation period and a second bitmap.

**8.** The method of claim 7, wherein, based on that the HARQ feedback is a positive ACK, the second bitmap is obtained by changing K bits to 0 among at least one bit set to 1 in the first bitmap, and
wherein K is a positive integer.

**9.** The method of claim 7, wherein, based on that the HARQ feedback is a NACK, the second bitmap is obtained by changing L bits to 1 among at least one bit set to 0 in the first bitmap, and
wherein L is a positive integer.

**10.** The method of claim 1, wherein, based on that a unicast connection is established between the first device and a second device, unicast communication between the first device and the second device is performed based on a dedicated resource pool for the first device and the second device.

**11.** The method of claim 1, wherein a maximum time interval between resources that the first device requiring power saving is allowed to inform through time resource assignment information included in the first SCI is smaller than a maximum time interval between resources that a third device not requiring power saving is allowed to inform through time resource assignment information included in third SCI.

**12.** The method of claim 1, wherein a time domain or a frequency domain of resources selectable by the first device requiring power saving is configured for the first device.

**13.** The method of claim 12, wherein the time domain is determined based on at least one of a specific time offset, a specific time period, or a specific number of slots, with respect to a specific reference time,

wherein the frequency domain is determined based on at least one of a specific frequency offset, a specific frequency period, or a specific number of subchannels, with respect to a specific reference frequency, and
wherein the first device requiring power saving is not allowed to select resources other than the time domain or the frequency domain.

**14.** A first device adapted to perform wireless communication, the first device comprising:

one or more memories storing instructions;
one or more transceivers; and
one or more processors connected to the one or more memories and the one or more transceivers, wherein the one or more processors execute the instructions to:

obtain a plurality of resource reservation periods configured in a resource pool;
determine at least one first candidate slot for selecting a first sidelink (SL) resource;
perform first sensing for at least one first slot related to the at least one first candidate slot based on at least one first resource reservation period among the plurality of resource reservation periods;
select the first SL resource based on the first sensing;
transmit first sidelink control information (SCI) including information for scheduling of a physical sidelink shared channel (PSSCH) through a physical sidelink control channel (PSCCH) based on the first SL resource;
transmit second SCI and a media access control (MAC) protocol data unit (PDU) through the PSSCH based on the first SL resource; and
determine, based on hybrid automatic repeat request (HARQ) feedback for the MAC PDU and the at least one first resource reservation period, at least one second resource reservation period for selecting a second SL resource among the plurality of resource reservation periods.

15. An apparatus adapted to control a first user equipment (UE), the apparatus comprising:

one or more processors; and
one or more memories operably connected to the one or more processors and storing instructions, wherein the one or more processors execute the instructions to:

obtain a plurality of resource reservation periods configured in a resource pool;
determine at least one first candidate slot for selecting a first sidelink (SL) resource;
perform first sensing for at least one first slot related to the at least one first candidate slot based on at least one first resource reservation period among the plurality of resource reservation periods;
select the first SL resource based on the first sensing;
transmit first sidelink control information (SCI) including information for scheduling of a physical sidelink shared channel (PSSCH) through a physical sidelink control channel (PSCCH) based on the first SL resource;
transmit second SCI and a media access control (MAC) protocol data unit (PDU) through the PSSCH based on the first SL resource; and
determine, based on hybrid automatic repeat request (HARQ) feedback for the MAC PDU and the at least one first resource reservation period, at least one second resource reservation period for selecting a second SL resource among the plurality of resource reservation periods.

16. A non-transitory computer-readable storage medium storing instructions that, when executed, cause a first device to:

obtain a plurality of resource reservation periods configured in a resource pool;
determine at least one first candidate slot for selecting a first sidelink (SL) resource;
perform first sensing for at least one first slot related to the at least one first candidate slot based on at least one first resource reservation period among the plurality of resource reservation periods;
select the first SL resource based on the first sensing;
transmit first sidelink control information (SCI) including information for scheduling of a physical sidelink shared channel (PSSCH) through a physical sidelink control channel (PSCCH) based on the first SL resource;
transmit second SCI and a media access control (MAC) protocol data unit (PDU) through the PSSCH based on the first SL resource; and
determine, based on hybrid automatic repeat request (HARQ) feedback for the MAC PDU and the at least one first resource reservation period, at least one second resource reservation period for selecting a second SL resource among the plurality of resource reservation periods.

17. A method for performing wireless communication by a second device, the method comprising:

receiving, from a first device, first sidelink control information (SCI) including information for scheduling of a physical sidelink shared channel (PSSCH) through a physical sidelink control channel (PSCCH) based on a first sidelink (SL) resource;
receiving, from the first device, second SCI and a media access control (MAC) protocol data unit (PDU) through the PSSCH based on the first SL resource; and
transmitting, to the first device, hybrid automatic repeat request (HARQ) feedback for the MAC PDU,
wherein the first SL resource is selected based on sensing performed based on at least one first resource reservation period among a plurality of resource reservation periods configured in a resource pool, and
wherein at least one second resource reservation period for selecting a second SL resource is determined among the plurality of resource reservation periods based on the HARQ feedback and the at least one first resource reservation period.

18. A second device adapted to perform wireless communication, the second device comprising:

one or more memories storing instructions;
one or more transceivers; and
one or more processors connected to the one or more memories and the one or more transceivers, wherein the one or more processors execute the instructions to:

receive, from a first device, first sidelink control information (SCI) including information for scheduling of a physical sidelink shared channel (PSSCH) through a physical sidelink control channel (PSCCH) based on a first sidelink (SL) resource;
receive, from the first device, second SCI and a media access control (MAC) protocol data unit (PDU) through the PSSCH based on the first SL resource; and
transmit, to the first device, hybrid automatic repeat request (HARQ) feedback for the MAC PDU,
wherein the first SL resource is selected based on sensing performed based on at least one first resource reservation period among a plurality of resource reservation periods configured in a resource pool, and
wherein at least one second resource reservation period for selecting a second SL resource is determined among the plurality of resource reservation periods based on the HARQ feedback and the at least one first resource reservation period.

19. An apparatus adapted to control a second user equipment (UE), the apparatus comprising:

one or more processors; and
one or more memories operably connected to the one or more processors and storing instructions, wherein the one or more processors execute the instructions to:

receive, from a first UE, first sidelink control information (SCI) including information for scheduling of a physical sidelink shared channel (PSSCH) through a physical sidelink control channel (PSCCH) based on a first sidelink (SL) resource;
receive, from the first UE, second SCI and a media access control (MAC) protocol data unit (PDU) through the PSSCH based on the first SL resource; and
transmit, to the first UE, hybrid automatic repeat request (HARQ) feedback for the MAC PDU,
wherein the first SL resource is selected based on sensing performed based on at least one first resource reservation period among a plurality of resource reservation periods configured in a resource pool, and
wherein at least one second resource reservation period for selecting a second SL resource is determined among the plurality of resource reservation periods based on the HARQ feedback and the at least one first resource reservation period.

20. A non-transitory computer-readable storage medium storing instructions that, when executed, cause a second device to:

receive, from a first device, first sidelink control information (SCI) including information for scheduling of a physical sidelink shared channel (PSSCH) through a physical sidelink control channel (PSCCH) based on a first sidelink (SL) resource;
receive, from the first device, second SCI and a media access control (MAC) protocol data unit (PDU) through the PSSCH based on the first SL resource; and
transmit, to the first device, hybrid automatic repeat request (HARQ) feedback for the MAC PDU,
wherein the first SL resource is selected based on sensing performed based on at least one first resource reservation period among a plurality of resource reservation periods configured in a resource pool, and

wherein at least one second resource reservation period for selecting a second SL resource is determined among the plurality of resource reservation periods based on the HARQ feedback and the at least one first resource reservation period.

# FIG. 1

# FIG. 2

# FIG. 3

```
···   |              One Frame (10ms)              |   ···
```

```
···  |      Half-Frame (5ms)      |  |      Half-Frame (5ms)      |  ···
```

```
···  | Subframe 0 |  ···  | Subframe 4 |  | Subframe 5 |  ···  | Subframe 9 |  ···
     |   (1ms)    |       |   (1ms)    |  |   (1ms)    |       |   (1ms)    |
```

Subframe (1ms)

|       | |
|-------|-|
| 15KHz | Slot 0 (14symbols) |

1ms

| 30KHz | Slot 0 (14symbols) | Slot 1 |

500us

| 60KHz | Slot 0 (14symbols) | Slot 1 | Slot 2 | Slot 3 |

250us

| 120KHz | Slot 0 (14symbols) | Slot 1 | Slot 2 | Slot 3 | Slot 4 | Slot 5 | Slot 6 | Slot 7 |

125us

# FIG. 4

Resource grid

A carrier
(up to 3300 subcarriers,
i.e., 275 RBs)

A BWP

1RB=12 subcarriers

1 RE

1subcarrier

1 symbol

l=0 ...

k=0

EP 4 322 646 A1

# FIG. 5

PRB N3

$N_{BWP, 2}^{size}$

PRB 1
PRB 0

PRB N2

$N_{BWP, 1}^{size}$

PRB 1
PRB 0

Carrier
Bandwidth

PRB N1

$N_{BWP, 2}^{start}$

$N_{BWP, 0}^{size}$

PRB 1
PRB 0

$N_{BWP, 1}^{start}$

CRB 0

$N_{BWP, 0}^{start}$

Freq.

Time

PRB 0 (Point A) in reference resource block

# FIG. 6

(a)

(b)

# FIG. 7

(a)

(b)

(c)

● : TX UE
◉ : RX UE

# FIG. 8

Legend:
- : certain slot among Y candidate slots
- : slots subject to sensing

EP 4 322 646 A1

# FIG. 9

EP 4 322 646 A1

# FIG. 10

slot #M    slot #M+T1    slot #M+T1+T2

: Y candidate slots

: slots subject to sensing

# FIG. 11

: certain slot among Y candidate slots

: slots subject to sensing

EP 4 322 646 A1

# FIG. 12

EP 4 322 646 A1

# FIG. 13

TX UE | RX UE

obtain resource reservation periods — S1310

determine at least one first candidate slot — S1320

perform first sensing
for at least one first slot — S1330

select first SL resource — S1340

PSCCH (first SCI) — S1350

PSSCH (second SCI, MAC PDU) — S1360

HARQ feedback — S1370

determine resource reservation period
and bitmap for sensing — S1380

# FIG. 14

EP 4 322 646 A1

32 slots

offset　interval

slot #1　slot #2　· · ·　slot #N

time

SFN = 0 or DFN = 0

: resources signaled through SCI

# FIG. 15

obtain resource reservation periods
configured in resource pool ~S1510

determine at least one first candidate slot
for selecting first SL resource ~S1520

perform first sensing for at least one first slot
related to at least one first candidate slot based on
at least one first resource reservation period
among resource reservation periods ~S1530

select first SL resource based on first sensing ~S1540

transmit first SCI including information for scheduling of
PSSCH through PSCCH based on first SL resource ~S1550

transmit second SCI and MAC PDU through PSSCH
based on first SL resource ~S1560

determine, based on HARQ feedback for MAC PDU
and at least one first resource reservation period,
at least one second resource reservation period
for selecting second SL resource among resource
reservation periods ~S1570

# FIG. 16

receive, from first device, first SCI including information for scheduling of PSSCH through PSCCH based on first SL resource — S1610

receive, from first device, second SCI and MAC PDU through PSSCH based on first SL resource — S1620

transmit, to first device, HARQ feedback for MAC PDU — S1630

# FIG. 17

<u>1</u>

EP 4 322 646 A1

# FIG. 18

# FIG. 19

1000(102/106, 202/206)

# FIG. 20

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 21

140a

100

Power supply unit

108

110

Communication unit

120

Control unit

130

Memory unit

140c

I/O unit

Display

Interface unit

140d

140b

# FIG. 22

## INTERNATIONAL SEARCH REPORT

| International application No. |
| --- |
| **PCT/KR2022/005198** |

| A. | CLASSIFICATION OF SUBJECT MATTER |
| --- | --- |

**H04W 72/02**(2009.01)i; **H04W 72/04**(2009.01)i; **H04W 72/12**(2009.01)i; **H04W 76/14**(2018.01)i; **H04W 76/28**(2018.01)i; **H04W 4/40**(2018.01)i; **H04W 92/18**(2009.01)i

According to International Patent Classification (IPC) or to both national classification and IPC

| B. | FIELDS SEARCHED |
| --- | --- |

Minimum documentation searched (classification system followed by classification symbols)

H04W 72/02(2009.01); H04W 4/46(2018.01); H04W 72/12(2009.01); H04W 76/27(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SL resource, resource reservation period, candidate slot, sensing, PSCCH, PSSCH, SCI, MAC PDU, HARQ, feedback, ACK, NACK, bitmap, unicast, 전용 자원 풀(dedicated resource pool), 최대 시간 간격 (maximum time gap), 전력 절약(power saving), time, frequency

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y<br>A | SONY. Discussion on sidelink resource allocation for power saving. R1-2103314, 3GPP TSG RAN WG1 #104bis-e, e-Meeting. 07 April 2021.<br>See sections 1-2.4; and figures 1(a)-5. | 1,6-7,10,12-20<br>2-5,8-9,11 |
| Y | US 2021-0007081 A1 (SAMSUNG ELECTRONICS, LTD.) 07 January 2021 (2021-01-07)<br>See paragraphs [0065]-[0358]. | 1,6-7,10,12-20 |
| Y | US 2018-0376308 A1 (HUAWEI TECHNOLOGIES CO., LTD.) 27 December 2018 (2018-12-27)<br>See paragraph [0042]; and claim 8. | 10 |
| A | HUAWEI et al. Sidelink resource allocation to reduce power consumption. R1-2102323, 3GPP TSG RAN WG1 Meeting #104bis-e, E-meeting. 07 April 2021.<br>See sections 2.2.1.2-2.3; and figure 10. | 1-20 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 July 2022** | **13 July 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2022/005198**

**C.** **DOCUMENTS CONSIDERED TO BE RELEVANT**

| Category* | Citation of document, with indication, where appropriate, of the relevant passages | Relevant to claim No. |
|---|---|---|
| A | CATT et al. Discussion on resource allocation for power saving. R1-2102606, 3GPP TSG RAN WG1 Meeting #104b-e, e-Meeting. 07 April 2021. See sections 1 and 3-3.2; and figure 11. | 1-20 |

Form PCT/ISA/210 (second sheet) (July 2019)

<table>
<tr><td colspan="2">**INTERNATIONAL SEARCH REPORT**<br>**Information on patent family members**</td><td>International application No.<br><br>**PCT/KR2022/005198**</td></tr>
</table>

| Patent document<br>cited in search report | Publication date<br>(day/month/year) | Patent family member(s) | Publication date<br>(day/month/year) |
|---|---|---|---|
| US 2021-0007081 A1 | 07 January 2021 | KR 10-2021-0003648 A | 12 January 2021 |
|  |  | WO 2021-002713 A1 | 07 January 2021 |
| US 2018-0376308 A1 | 27 December 2018 | CN 108886510 A | 23 November 2018 |
|  |  | CN 108886510 B | 31 August 2021 |
|  |  | EP 3410663 A1 | 05 December 2018 |
|  |  | EP 3410663 A4 | 20 February 2019 |
|  |  | US 10887740 B2 | 05 January 2021 |
|  |  | WO 2017-147904 A1 | 08 September 2017 |

Form PCT/ISA/210 (patent family annex) (July 2019)